# EUROPEAN PATENT APPLICATION

(11) **EP 4 589 817 A1**
(43) Date of publication of application: **23.07.2025**
(21) Application number: 24220823.9
(22) Date of filing: 17.12.2024
(51) Int. Cl.: H02K 1/276, H02K 1/32, H02K 9/19

(54) **OIL-COOLED MOTOR ROTOR IN GROOVE, MOTOR, POWERTRAIN, AND ELECTRIC VEHICLE**

(30) Priority: 16.01.2024 CN 202410064433
(71) Applicant: Huawei Digital Power Technologies Co., Ltd., Shenzhen, Guangdong 518043 (CN)
(72) Inventor: Hou, Jining, Shenzhen, 518043 (CN); Sun, Tao, Shenzhen, 518043 (CN); Fu, Fangyuan, Shenzhen, 518043 (CN); Wang, Sixue, Shenzhen, 518043 (CN); Guo, Qiqi, Shenzhen, 518043 (CN)
(74) Representative: Gill Jennings & Every LLP

(57) **Abstract**

This application provides an oil-cooled motor rotor in a groove, a motor, a powertrain, and an electric vehicle. The motor rotor includes a motor shaft, at least one end plate, at least one rotor iron core, and a plurality of magnetic steels. One rotor iron core and one end plate are adjacently arranged in an axial direction of the motor. The one rotor iron core includes a plurality of magnetic steel grooves. Each magnetic steel groove is configured to fasten at least one magnetic steel. At least one magnetic steel groove includes a plurality of bumps. Each bump protrudes from a groove wall of one magnetic steel groove to one magnetic steel. One end that is of each bump and that faces the one magnetic steel is configured to abut the one magnetic steel. The bump enables the magnetic steel groove to form a gap with the magnetic steel. The gap is configured to form an internal flow channel of the one rotor iron core and is configured to communicate with an oil groove of the one end plate. Cooling oil is in direct contact with the magnetic steel to cool the magnetic steel, thereby improving cooling efficiency of the rotor iron core, reducing coercive force of the magnetic steel, and reducing production costs of the magnetic steel.

## Description

### TECHNICAL FIELD

This application relates to the field of motor technologies, and in particular, to an oil-cooled motor rotor in a groove, a motor, a powertrain, and an electric vehicle.

### BACKGROUND

A motor rotor generates a large amount of heat in a working process. Conventionally, glue pouring or injection molding is performed on a magnetic steel groove on a rotor iron core, to fasten a magnetic steel to the magnetic steel groove. Generally, cooling oil is injected into a lightening hole on the rotor iron core to reduce a temperature of the rotor iron core. Heat of the magnetic steel is conducted through the rotor iron core to cool the magnetic steel, and cooling efficiency is low. As a result, coercive force of the magnetic steel is large, production costs of the magnetic steel are increased, and cooling efficiency of the motor rotor is low.

### SUMMARY

This application provides an oil-cooled motor rotor in a groove, a motor, a powertrain, and an electric vehicle.

According to a first aspect, this application provides an oil-cooled motor rotor in a groove, where the motor rotor includes a motor shaft, at least one end plate, at least one rotor iron core, and a plurality of magnetic steels, the at least one rotor iron core is configured to be in coaxial transmission with the motor shaft, one rotor iron core and one end plate are adjacently arranged in an axial direction of a motor, the one rotor iron core includes a plurality of magnetic steel grooves, and each magnetic steel groove is configured to fasten at least one magnetic steel. At least one magnetic steel groove includes a plurality of bumps, each bump protrudes from a groove wall of one magnetic steel groove to one magnetic steel, one end that is of each bump and that faces the one magnetic steel is configured to abut the one magnetic steel, and there is a gap between a part of the groove wall of the one magnetic steel groove other than the bump and the one magnetic steel. The gap is configured to form an internal flow channel of the one rotor iron core and is configured to communicate with an oil groove of the one end plate.

In this embodiment of this application, the motor rotor is fastened on and sleeved on the motor shaft. After receiving an alternating current, the motor stator drives the motor rotor to rotate, to drive the motor shaft to rotate. The magnetic steel groove is configured to accommodate the magnetic steel, and the magnetic steel is configured to generate a magnetic field of the motor rotor. The one end plate and the at least one rotor iron core are sleeved on the motor shaft, so that the at least one rotor iron core and the one end plate rotate with the motor shaft. In this embodiment of this application, the one rotor iron core is one rotor iron core adjacent to the one end plate.

In this embodiment of this application, the magnetic steel groove includes the plurality of bumps, and each bump protrudes to the magnetic steel. This helps squeeze the bump when the magnetic steel is inserted, helps the bump elastically fasten the magnetic steel, and helps form the gap between the magnetic steel and the magnetic steel groove. In this embodiment of this application, the bump protrudes from the groove wall of the one magnetic steel groove to the one magnetic steel bump. This indicates that the groove wall of the one magnetic steel groove has a part spaced from the one magnetic steel. For example, a part of the groove wall near two sides of the bump is spaced from the one magnetic steel, so that at least a part of the groove wall near the bump has the gap with the one magnetic steel.

In this embodiment of this application, there is the gap between the part of the groove wall of the one magnetic steel groove other than the bump and the one magnetic steel, and the magnetic steel groove and the gap penetrate the rotor iron core in an axial direction of the motor rotor.

In this embodiment of this application, the gap is configured to form an internal flow channel of the one rotor iron core and is configured to communicate with an oil groove of the one end plate. The internal flow channel of the one rotor iron core is used for cooling oil to flow into the rotor iron core. The gap helps import the cooling oil in the oil groove on the end plate into the internal flow channel of the rotor iron core through the gap adj acent to the end plate, so that the rotor iron core is cooled.

If plastic is filled between the magnetic steel and the magnetic steel groove to fasten the magnetic steel in the magnetic steel groove, there is no gap between the part that is of the magnetic steel and that is fastened to the magnetic steel groove through the plastic. To ensure structural stability between the magnetic steel and the magnetic steel groove, generally, the plastic is filled between at least two opposite surfaces of the magnetic steel and the magnetic steel groove to implement fastening, so that the surface that is of the magnetic steel groove and that is used to fasten the magnetic steel and the magnetic steel are filled with plastic, and there is no gap for oil. Therefore, the surface that is of the magnetic steel and that is fastened to the groove wall of the magnetic steel groove through the plastic cannot be directly cooled by cooling oil, and cooling effect is poor. In this embodiment of this application, the groove wall of the one magnetic steel groove is fastened to the one magnetic steel through the bump, so that there is the gap between the groove wall having the bump and the magnetic steel. The gap is configured to form the internal flow channel of the one rotor iron core and is configured to communicate with the oil groove of the one end plate. In this way, the cooling oil can flow into the gap, so that a surface of the magnetic steel that is fastened to and that abuts the bump can be directly cooled by the cooling oil, thereby improving cooling effect on the magnetic steel.

In this embodiment of this application, the oil groove of each end plate is configured to communicate an internal oil channel of the motor shaft with the gap. This helps the end plate communicate the internal oil channel of the motor shaft with the gap, and helps the end plate transport cooling oil of the internal oil channel of the motor shaft to the gap for cooling by the magnetic steel. This helps reduce coercive force of the magnetic steel, and reduce production costs of the magnetic steel.

In an embodiment, the groove wall of the one magnetic steel groove includes two first side walls, and the two first side walls are arranged opposite to each other in a first direction. One first side wall includes at least one bump, the at least one bump protrudes to the one magnetic steel in the first direction, there is a first gap between a part of the one first side wall other than the at least one bump and the one magnetic steel, and the first gap is configured to form the internal flow channel of the one rotor iron core and is configured to communicate with the oil groove of the one end plate.

In this embodiment of this application, the one first side wall includes the at least one bump, and the at least one bump protrudes to the one magnetic steel in the first direction, so that after the magnetic steel is inserted into the magnetic steel groove, the at least one bump is configured to elastically abut the one magnetic steel.

In this embodiment of this application, there is the first gap between the part of the first side wall other than the at least one bump and the one magnetic steel, and the first gap is used by the rotor iron core to form the internal flow channel, so that the first gap is configured to form a part of the internal flow channel of the rotor iron core. The cooling oil flows in from the first gap, and flows in the internal flow channel. This helps cool the magnetic steel in the rotor iron core.

In this embodiment of this application, the first gap is configured to form an internal flow channel of the one rotor iron core and is configured to communicate with an oil groove of the one end plate. The internal flow channel of the rotor iron core is used for the cooling oil to flow into the rotor iron core. The first gap helps import the cooling oil in the oil groove of the end plate into the internal flow channel through the first gap adjacent to the end plate, so that the rotor iron core is cooled.

In an embodiment, the one magnetic steel includes one first magnetic steel surface, the one first magnetic steel surface is opposite to the one first side wall in the first direction, one end that is of the at least one bump and that faces the one magnetic steel is configured to abut the one first magnetic steel surface, and the one first magnetic steel surface is planar.

In this embodiment of this application, the first gap is formed between the one first magnetic steel surface and the one first side wall through the at least one bump, so that the cooling oil smoothly flows through the internal flow channel of the rotor iron core. The one bump protrudes from the one first side wall to the one first magnetic steel surface, and the one first magnetic steel surface is flat, so that the one first side wall, the one bump, and the one first magnetic steel surface form an "I"-shaped structure, and a larger first gap is formed on two sides of the one bump. This helps more cooling oil flow through the first gap, and helps improve cooling efficiency of the rotor iron core.

In an embodiment, the one first side wall further includes at least one groove, the groove caves in the first direction and faces away from the one magnetic steel, the at least one groove has one bump, the one bump protrudes from a groove bottom of the groove in which the one bump is located to the one magnetic steel, and a length of the one bump in the first direction is greater than a groove depth of the groove in which the one bump is located.

In this embodiment of this application, the one first side wall further includes the at least one groove, the groove caves in the first direction and faces away from the one magnetic steel, and the groove provides space for accommodating the bump, thereby facilitating arrangement of the bump. The at least one groove has the one bump, the one bump protrudes from a groove bottom of a groove in which the bump is located to the one magnetic steel bump, and existence of the groove makes a length of the bump longer. This helps increase elastic force of the bump. The one bump is more easily squeezed by the magnetic steel, so that the bump is fastened relative to the magnetic steel. In this embodiment of this application, the groove caves in the first direction and faces away from the one magnetic steel, so that a distance between the groove bottom of the groove and the one magnetic steel is larger, and a length of the gap between the groove bottom of the groove and the one magnetic steel in the first direction is larger. This helps form a larger first gap for the cooling oil to flow, thereby improving cooling effect on one magnetic steel.

In this embodiment of this application, a length of one bump in the first direction is greater than a groove depth of a groove in which the one bump is located. This facilitates bending of the one bump. If the length of the one bump in the first direction is less than the groove depth of the groove in which the one bump is located, when the magnetic steel is inserted into the magnetic steel groove, the magnetic steel cannot contact the bump on the first side wall of the magnetic steel groove. As a result, the magnetic steel cannot be fastened to the magnetic steel groove.

In an embodiment, the groove wall of the one magnetic steel groove further includes two second side walls, the two second side walls are arranged opposite to each other in a second direction, and the first direction intersects the second direction. There is a second gap between one second side wall and the one magnetic steel, the second gap is configured to form the internal flow channel of the one rotor iron core and is configured to communicate with the internal flow channel of the one end plate, and the second gap is communicated with the first gap.

In this embodiment of this application, existence of the two second side walls helps form the second gap between the magnetic steel groove and the magnetic steel. There is the second gap between the one second side wall and the one magnetic steel, and the second gap helps provide more space for the cooling oil to flow between the one second side wall and the one magnetic steel. The second gap is configured to form the internal flow channel of the one rotor iron core and is configured to communicate with the internal flow channel of the one end plate. The internal flow channel of the rotor iron core is configured to flow the cooling oil into the rotor iron core. In other words, the second gap helps cool the rotor iron core. The second gap is communicated with the first gap. This facilitates flowing of the cooling oil in the magnetic steel groove, and further helps the cooling oil wrap around the magnetic steel for cooling, thereby helping improve cooling efficiency.

In an embodiment, the one first side wall includes two limiting bumps, the two limiting bumps protrude to a center of the one magnetic steel groove, and the two limiting bumps are configured to limit a moving distance of the one magnetic steel in the second direction. In the second direction, the two limiting bumps are arranged at two ends of the one magnetic steel, a spacing between the two limiting bumps is greater than a length of the one magnetic steel, there is a third gap between at least one limiting bump and the one magnetic steel in the second direction, and the third gap is configured to communicate the first gap with the second gap.

In this embodiment of this application, the two limiting bumps protrude to the center of the one magnetic steel groove, so that there is space between the two limiting bumps in the second direction to accommodate the magnetic steel. The two limiting bumps are configured to control a moving distance of the magnetic steel in the second direction within a specific range.

In this embodiment of this application, in the second direction, the two limiting bumps are arranged at two ends of the one magnetic steel, the two limiting bumps can limit the moving distance of the magnetic steel in the second direction. In the second direction, the two limiting bumps are arranged at the two ends of the magnetic steel, a spacing between the two limiting bumps is greater than a length of the one magnetic steel, and movable space is provided between the two limiting bumps for the magnetic steel.

In this embodiment of this application, there is a third gap between the at least one limiting bump and the one magnetic steel in the second direction. When the two limiting bumps and the at least one bump are located on a same first side wall, the third gap is configured to communicate the first gap with the second gap. This helps the cooling oil in the magnetic steel groove flow around the magnetic steel, and helps accelerate cooling of the magnetic steel. In an embodiment, when the motor rotor rotates, the magnetic steel is swung to move outwards, so that the third gap is formed between the magnetic steel and one limiting bump close to an axis center of the rotor.

In an embodiment, a length of each bump protruding to the magnetic steel that the magnetic steel groove in which the bump is located abuts is greater than a distance between a groove wall of the magnetic steel groove in which the bump is located and the magnetic steel that the bump abuts, and after the magnetic steel is inserted into the magnetic steel groove in which the bump is located, the bump is in a bent state.

In this embodiment of this application, when the magnetic steel is not inserted into the magnetic steel groove, the bump protrudes to the center of the magnetic steel groove in the first direction. A protruding direction of the bump to the center of the magnetic steel groove is parallel to the first direction. A protruding length of the bump to the center of the magnetic steel groove is greater than a distance between a groove wall of the magnetic steel groove in which the bump is located and the magnetic steel. After the magnetic steel is inserted into the magnetic steel groove, because the bump is elastic and is bent after being squeezed by the magnetic steel, the bent bump exerts acting force on the magnetic steel, so that the magnetic steel is relatively fastened to the bump and the groove wall of the magnetic steel groove, and the stable gap is formed for stable flow of the cooling oil.

In this embodiment of this application, the bump is configured to fasten the magnetic steel, so that the stable gap is formed between the magnetic steel in the magnetic steel groove and the groove wall of the magnetic steel groove, and the cooling oil flows through the gap between the groove wall of the magnetic steel groove and the magnetic steel. The bump protrudes from the groove wall of the magnetic steel groove to the center of the magnetic steel groove, so that when the magnetic steel is inserted into the magnetic steel groove, the magnetic steel is in contact with the bump, so that the bump fastens the magnetic steel. One end that is of the bump and that faces the axis center of the magnetic steel groove abuts the magnetic steel, so that the gap is formed between the groove wall of the magnetic steel groove and the magnetic steel, and space is provided for cooling oil to flow through the magnetic steel groove. This helps improve cooling effect of the magnetic steel, helps reduce coercive force of the magnetic steel, and reduces costs of the magnetic steel.

In this embodiment of this application, the magnetic steel does not need to be fastened in a plastic injection manner or a glue injection manner. This can prevent a plastic injection material and a plastic injection material from blocking the gap, avoid a case in which the oil cannot flow through the magnetic steel groove, and improve cooling efficiency of the motor rotor.

In an embodiment, the one end plate includes a plurality of first oil grooves, and each first oil groove is configured to communicate the internal oil channel of the motor shaft with at least one gap in the one rotor iron core. A groove opening of each first oil groove faces the one rotor iron core in the axial direction of the motor. In a radial direction of the motor, a spacing between a groove wall that is of one first oil groove and that faces away from an axis center of the motor and the axis center of the motor is greater than a spacing between the one magnetic steel groove and the axis center of the motor, and a spacing between a groove wall that is of the one first oil groove and that faces the axis center of the motor and the axis center of the motor is less than a spacing between a groove wall that is of the one magnetic steel groove and that faces away from the axis center of the motor and the axis center of the motor.

In this embodiment of this application, the first oil groove is communicated with the internal oil channel of the motor shaft, so that the cooling oil in the internal oil channel of the motor shaft is imported from the first oil groove of the end plate into the rotor iron core, to cool the rotor iron core and the magnetic steel. Each first oil groove is communicated with at least one gap in the one rotor iron core, so that the first oil groove can export, to the at least one gap in the rotor iron core, the cooling oil imported from the internal oil channel, and the cooling oil can enter the internal flow channel of the rotor iron core. This facilitates flowing of the cooling oil in the magnetic steel groove, and helps cool the magnetic steel.

In this embodiment of this application, the groove opening of each first oil groove faces the one rotor iron core in the axial direction of the motor, so that the first oil groove can smoothly flow the cooling oil from the internal oil channel of the motor shaft into the internal flow channel of the rotor iron core.

In this embodiment of this application, in the radial direction of the motor, the spacing between the groove wall that is of the one first oil groove and that faces away from the axis center of the motor and the axis center of the motor is greater than the spacing between the one magnetic steel groove and the axis center of the motor, and the spacing between the groove wall that is of the one first oil groove and that faces the axis center of the motor and the axis center of the motor is less than the spacing between the groove wall that is of the one magnetic steel groove and that faces away from the axis center of the motor and the axis center of the motor. This helps a projection of the one first oil groove in the axial direction of the motor cover a part of one magnetic steel groove, helps import the cooling oil in the one first oil groove into the one magnetic steel groove for cooling of the magnetic steel, helps reduce coercive force of the magnetic steel, and helps reduce production costs of the magnetic steel.

In an embodiment, in the radial direction of the motor, the spacing between the groove wall that is of the one first oil groove and that faces away from the axis center of the motor and the axis center of the motor is less than the spacing between the one magnetic steel and the axis center of the motor. Alternatively, in the radial direction of the motor, the spacing between the groove wall that is of the one first oil groove and that faces the axis center of the motor and the axis center of the motor is greater than the spacing between the one magnetic steel and the axis center of the motor.

In embodiments of this application, in an embodiment, in the radial direction of the motor, the spacing between the groove wall that is of the one first oil groove and that faces away from the axis center of the motor and the axis center of the motor is less than the spacing between the one magnetic steel and the axis center of the motor. In other words, a projection of the one first oil groove in the axial direction of the motor partially overlaps a projection of the one magnetic steel, and the projection of the one first oil groove partially overlaps the first gap. This helps the cooling oil in the first oil groove be imported into the magnetic steel groove from the first gap of the magnetic steel groove and the magnetic steel, so that the magnetic steel can be cooled.

In an embodiment, in the radial direction of the motor, the spacing between the groove wall that is of the one first oil groove and that faces the axis center of the motor and the axis center of the motor is greater than the spacing between the one magnetic steel and the axis center of the motor. A projection part between the projection of the first oil groove and the projection of the magnetic steel groove in the axial direction of the motor mainly overlaps a projection of the second gap. This helps the cooling oil in the first oil groove be imported into the magnetic steel groove from the second gap of the magnetic steel groove and the magnetic steel, so that the magnetic steel can be cooled

In an embodiment, a minimum spacing between the one magnetic steel groove and one magnetic steel groove adjacent to the one magnetic steel groove in a circumferential direction of the motor is less than a length of the one first oil groove.

In this embodiment of this application, the one first oil groove may simultaneously export, to the one magnetic steel groove and the one magnetic steel groove adjacent to the first oil groove, the cooling oil imported from the internal oil channel of the motor shaft. In other words, the one first oil groove may simultaneously import the cooling oil into two magnetic steel grooves. This helps reduce a quantity of arranged first oil grooves, and helps the one first oil groove to simultaneously flow the cooling oil into the two magnetic steel grooves of the rotor iron core, and to simultaneously cool two magnetic steels.

In an embodiment, the one rotor iron core further includes a plurality of oil guiding grooves, each oil guiding groove penetrates the one rotor iron core in the axial direction of the motor, the one end plate further includes a plurality of second oil grooves, and one second oil groove is configured to communicate the internal oil channel of the motor shaft, one oil guiding groove, with the one first oil groove. In the radial direction of the motor, a length of the one second oil groove is greater than the length of the one first oil groove, and a spacing between the one second oil groove and the axis center of the motor is less than a spacing between the one first oil groove and the axis center of the motor. In the circumferential direction of the motor, the length of the one second oil groove is greater than the length of the one first oil groove.

In this embodiment of this application, the oil guiding groove is configured for flow of the cooling oil for the motor rotor to cool. The one end plate further includes the plurality of second oil grooves, and the second oil groove is configured to import the cooling oil in the internal oil channel of the motor shaft into the oil guiding groove, to cool the rotor iron core. The one second oil groove may further import the cooling oil in the internal oil channel of the motor shaft into the one first oil groove. This facilitates flow of the cooling oil on the one end plate, and also helps the first oil groove receive the cooling oil from the second oil groove, and import the cooling oil into the magnetic steel groove for direct contact cooling of the magnetic steel.

In this embodiment of this application, in the radial direction of the motor, the length of the one second oil groove is greater than the length of the one first oil groove, and a large length of the one second oil groove helps the second oil groove import as much cooling oil in the internal oil channel of the motor shaft into the oil guiding groove through the end plate as possible. The cooling oil may be further imported into the first oil groove, so that the magnetic steel in the magnetic steel groove is cooled. Space for the cooling oil that is imported into the gap in the magnetic steel groove by the first oil groove is limited, and a small length of the one first oil groove can also meet an amount of the cooling oil that needs to flow in the magnetic steel groove.

In this embodiment of this application, the spacing between the one second oil groove and the axis center of the motor is less than the spacing between the one first oil groove and the axis center of the motor, so that when the motor rotor rotates, the cooling oil in the one second oil groove can flow into the one first oil groove in a direction of centrifugal force. In this way, more magnetic steel grooves can be formed in a large area around the rotor iron core, thereby improving performance of the motor rotor. In an embodiment, when a rotational speed of the motor rotor is low, heat generated is not large, and the spacing between the one second oil groove and the axis center of the motor is less than the spacing between the one first oil groove and the axis center of the motor. In this case, the cooling oil is cooled through oil that flows through the second oil groove closer to the axis center. In this way, the second oil groove can meet heat dissipation and cooling effect at a low speed. When the motor rotor generates large heat, the motor rotor that rotates at a high speed can dump the cooling oil to an outer magnetic steel groove. The second oil groove and the first oil groove are respectively used to feed the oil to the oil guiding groove and the magnetic steel groove, to improve the heat dissipation and cooling effect of the motor rotor that rotates at the high speed

In this embodiment of this application, in the circumferential direction of the motor, the length of the one second oil groove is greater than the length of the one first oil groove. In the circumferential direction of the motor, when the large length of the one second oil groove helps the second oil groove import as much cooling oil in the internal oil channel of the motor shaft into the oil guiding groove through the end plate as possible, the cooling oil may be further imported into the first oil groove, so that the magnetic steel in the magnetic steel groove is cooled. In the circumferential direction of the motor, the length of one first oil groove is small. This helps the motor rotor to shunt and cool at a high speed and a low speed, so that cooling effect of the one first oil groove and the one second oil groove is more adapted to operation of the motor rotor.

In an embodiment, an outer diameter of the one end plate is less than an outer diameter of the one rotor iron core, and a part of the gap between the one magnetic steel groove and the one magnetic steel inside the one magnetic steel groove is exposed relative to the one end plate.

In this embodiment of this application, the outer diameter of the one end plate is less than the outer diameter of the one rotor iron core. When the motor rotor rotates at the high speed, at least a part of the magnetic steel groove is exposed to at least one end plate. This helps the cooling oil in the rotor iron core flow out of the motor rotor from the magnetic steel groove, thereby helping reduce an oil accumulation problem of the motor rotor, and helping reduce an oil churning loss. If the outer diameter of the one end plate is greater than the outer diameter of the one rotor iron core, the cooling oil in the magnetic steel groove cannot flow out of the motor rotor from an end plate side, so that the cooling oil penetrates into an air gap of a first iron core punching or a second iron core punching that are stacked, causing the oil churning loss.

According to a second aspect, an embodiment of this application provides a motor, including a motor housing, a motor stator, and the motor rotor according to any one of the foregoing implementations. The motor housing is configured to sleeve on and fasten the motor stator, the motor stator is configured to sleeve on the motor rotor, and the motor rotor is configured to sleeve on and to be fastened to the motor shaft. In a motor in this application, a magnetic steel groove on the motor rotor includes the plurality of bumps, so that a gap is formed between the magnetic steel groove and a magnetic steel. When cooling oil flows into a rotor iron core from an internal oil channel of a motor shaft, the cooling oil is in direct contact with the magnetic steel in the magnetic steel groove for cooling. This helps improve cooling efficiency of the rotor iron core, reduce coercive force of the magnetic steel, and reduce production costs of the magnetic steel.

According to a third aspect, an embodiment of this application provides a powertrain. The powertrain includes a reducer and the motor according to any one of the foregoing implementations. A motor shaft of the motor is configured to be in transmission connection with an input shaft of the reducer, and an output shaft of the reducer is configured to be in transmission connection with wheels of an electric vehicle. A magnetic steel groove of the motor in this application includes a bump, so that a gap is formed between the magnetic steel groove and a magnetic steel for cooling oil to flow through, and the cooling oil is in direct contact with the magnetic steel in a rotor iron core for cooling. This helps improve cooling efficiency of the rotor iron core, and improves cooling effect of the powertrain.

According to a fourth aspect, an embodiment of this application provides an electric vehicle. The electric vehicle includes a vehicle frame, wheels, and the powertrain according to any one of the foregoing implementations. The vehicle frame is configured to fasten the powertrain, and the powertrain is configured to drive the wheels. A magnetic steel groove of the motor in the powertrain in this application includes a bump, so that when a magnetic steel is inserted into the magnetic steel groove, a gap is formed between the magnetic steel groove and the magnetic steel, and cooling oil of the internal oil channel of the motor shaft can be in direct contact with the magnetic steel when flowing into a rotor iron core, to cool the magnetic steel. This helps improve cooling efficiency of the rotor iron core and cooling effect of the powertrain, thereby improving vehicle performance of the electric vehicle.

### BRIEF DESCRIPTION OF DRAWINGS

To describe technical solutions in embodiments of this application more clearly, the following describes the accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a diagram of a structure of a motor rotor according to an embodiment of this application;
FIG. 4 is an exploded view of a motor rotor according to an embodiment of this application;
FIG. 5 is a diagram of a structure of a rotor iron core according to an embodiment of this application;
FIG. 6 is a diagram of a structure of a magnetic steel groove according to an embodiment of this application;
FIG. 7 is a diagram of a partial structure of a rotor iron core according to an embodiment of this application;
FIG. 8 is a partial enlarged view of a part M1 in FIG. 7;
FIG. 9 is a partial sectional view of a motor rotor according to an embodiment of this application;
FIG. 10 is a partial enlarged view of a part M2 in FIG. 9;
FIG. 11 is a partial sectional view of a motor rotor according to an embodiment of this application;
FIG. 12 is a diagram of a structure of a rotor iron core according to an embodiment of this application;
FIG. 13 is a diagram of a structure of a first iron core punching according to an embodiment of this application;
FIG. 14 is a partial enlarged view of a part M3 in FIG. 13;
FIG. 15 is a diagram of a structure of a second iron core punching according to an embodiment of this application;
FIG. 16 is a partial enlarged view of a part M4 in FIG. 15;
FIG. 17 is a diagram of a structure of a rotor iron core according to an embodiment of this application;
FIG. 18 is a diagram of a structure of an end plate according to an embodiment of this application;
FIG. 19 is a diagram of a structure of an end plate according to an embodiment of this application;
FIG. 20 is a diagram of a structure of an end plate according to an embodiment of this application;
FIG. 21 is a diagram of a structure of a motor shaft according to an embodiment of this application;
FIG. 22 is a sectional view of a motor rotor according to an embodiment of this application; and
FIG. 23 is a diagram of a structure of a motor rotor according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, orientation terms such as "upper" and "lower" are defined relative to orientations of schematically disposed structures in the accompanying drawings. It should be understood that these directional terms are relative concepts and are used for relative description and clarification, and may vary accordingly with changes of the orientations of the structures.

For ease of understanding, the following explains and describes related technical terms used in embodiments of this application.

Verticality: Verticality defined in embodiments of this application is not limited to an absolute vertical intersection (where an included angle is 90 degrees) relationship. A case in which there is no absolute perpendicular intersection due to assembling tolerance, design tolerance, impact of structural flatness, or another factor is allowed. An error within a small angle range is allowed. For example, an assembling error range of 80 degrees to 100 degrees may be understood as a vertical relationship.

Staggering: Staggering defined in embodiments of this application means that projections of two adjacent iron core punchings in an axial direction of a motor partially overlap.

Alignment: Alignment defined in embodiments of this application means that the projections of the two adjacent iron core punchings in the axial direction of the motor completely overlap.

To directly cool a magnetic steel and improve cooling efficiency of a motor rotor, this application provides an oil-cooled motor rotor in a groove, where the motor rotor includes a motor shaft, at least one end plate, at least one rotor iron core, and a plurality of magnetic steels, the at least one rotor iron core is configured to be in coaxial transmission with the motor shaft, one rotor iron core and one end plate are adjacently arranged in an axial direction of a motor, the one rotor iron core includes a plurality of magnetic steel grooves, and each magnetic steel groove is configured to fasten at least one magnetic steel. At least one magnetic steel groove includes a plurality of bumps, each bump protrudes from a groove wall of one magnetic steel groove to one magnetic steel, one end that is of each bump and that faces the one magnetic steel is configured to abut the one magnetic steel, and there is a gap between a part of the groove wall of the one magnetic steel groove other than the bump and the one magnetic steel. The gap is configured to form an internal flow channel of the one rotor iron core and is configured to communicate with an oil groove of the one end plate. A gap is formed between the magnetic steel groove and the magnetic steel through the bump, and cooling oil can flow in the gap, so that the cooling oil is in direct contact with the magnetic steel to cool the magnetic steel. This helps improve cooling efficiency of the rotor iron core, helps reduce coercive force of the magnetic steel, and reduces production costs of the magnetic steel.

The motor rotor provided in this embodiment of this application is used in the motor, the motor is used in a powertrain, and the powertrain is used in an electric vehicle, to improve overall performance of the electric vehicle.

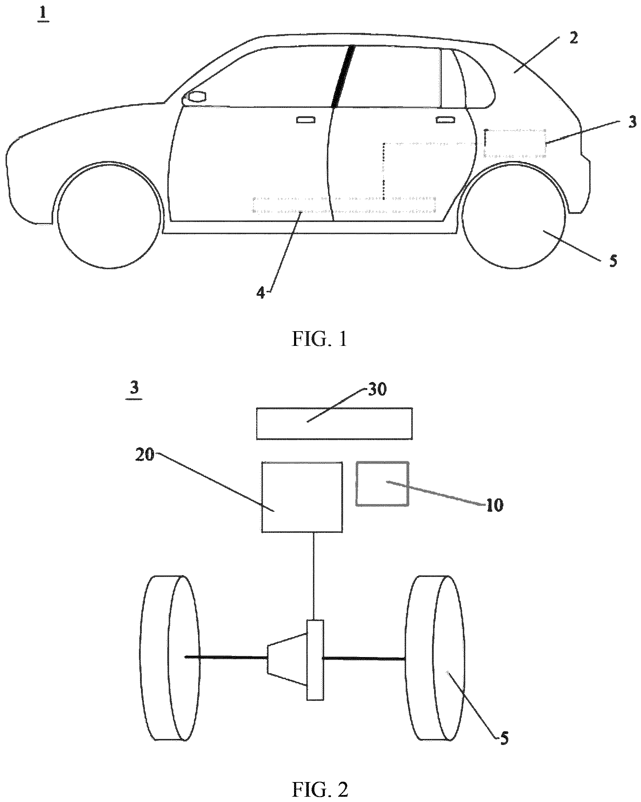

FIG. 1 is a diagram of a structure of an electric vehicle 1 according to an embodiment of this application. In this embodiment of this application, the electric vehicle 1 includes a vehicle frame 2, a powertrain 3, a battery pack 4, and wheels 5. The powertrain 3 and the battery pack 4 are fastened to the vehicle frame 2. The powertrain 3 is configured to receive power supplied by the battery pack 4, and is configured to drive the wheels 5.

In this embodiment of this application, the battery pack 4 may also be referred to as a power battery.

In this embodiment of this application, the vehicle frame 2 may also be referred to as a vehicle body.

In this embodiment of this application, the electric vehicle 1 is a wheeled device driven or pulled by a power apparatus.

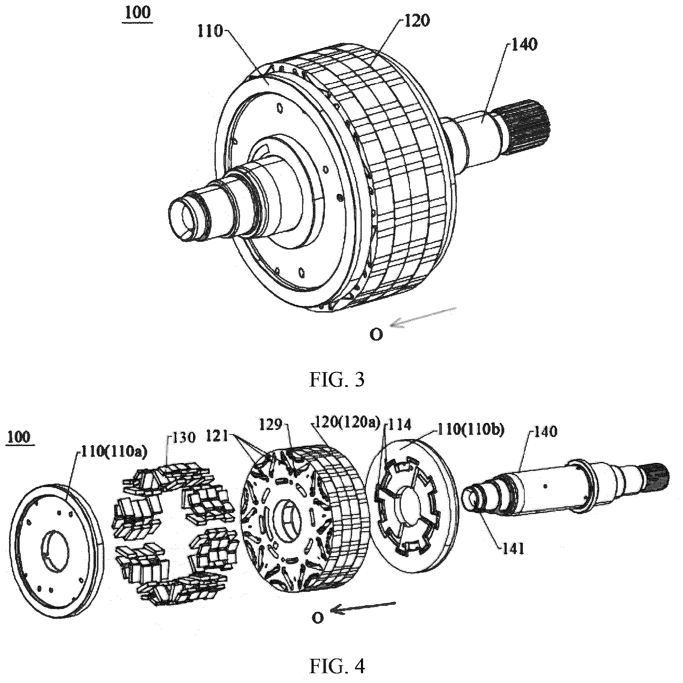

Refer to FIG. 2 and FIG. 3. FIG. 2 is a diagram of a structure of the powertrain 3 according to an embodiment of this application, and FIG. 3 is a diagram of a structure of a motor rotor 100 according to an embodiment of this application. In an embodiment, the powertrain 3 includes a motor 10 and a reducer 20. The motor 10 includes a motor shaft 140 (as shown in FIG. 3), a motor stator (not shown in the figure), and a motor rotor 100. The reducer 20 includes a gear assembly (not shown in the figure), an input shaft (not shown in the figure), and an output shaft (not shown in the figure). The input shaft receives power transmitted by the motor shaft 140 of the motor 10 and transmits the power to the output shaft through the gear assembly. The gear assembly may be set based on a requirement, and may be a single-gear, two-gear or, multi-gear deceleration gear assembly. The motor rotor 100 is fastened on and sleeved on the motor shaft 140. After receiving an alternating current, the motor stator drives the motor rotor 100 to rotate, to drive the motor shaft 140 to rotate. The motor shaft 140 of the motor 10 is configured to be in transmission connection with the input shaft of the reducer 20.

In this embodiment of this application, the motor 10 and the reducer 20 are arranged in an axial direction O of the motor, and the motor shaft 140 of the motor 10 is fastened to the input shaft of the reducer 20.

Still refer to FIG. 2 and FIG. 3. In an embodiment, the powertrain 3 further includes a motor controller 30. The motor controller 30 is configured to: receive a direct current transmitted by the battery pack 4, convert the direct current into an alternating current, and transmit the alternating current to the motor 10. The motor 10 is in transmission connection with the reducer 20. The motor 10 is configured to: after receiving the alternating current, convert electric energy into mechanical energy, and transmit the mechanical energy to the reducer 20. The reducer 20 is in transmission connection with the wheels 5, and the reducer 20 is configured to transmit power to the wheels 5, to drive the wheels 5 to rotate.

In an embodiment, the powertrain 3 includes an integrated housing. The integrated housing includes at least two of a motor accommodating cavity, a reducer accommodating cavity, and a motor controller accommodating cavity. The motor accommodating cavity is configured to accommodate the motor rotor 100, the motor stator, and the motor shaft 140. The reducer accommodating cavity is configured to accommodate the gear assembly, the input shaft, an intermediate shaft, the output shaft, and the like of the reducer 20. The motor controller accommodating cavity is configured to accommodate components such as a power module, a circuit board, and a bus capacitor of the motor controller. The integrated housing enables an overall structure of the powertrain 3 more integrated and has a small size, and can be used in an electric vehicle with small mounting space.

In an embodiment, the motor 10, the reducer 20, and the motor controller 30 in the powertrain 3 may alternatively be separated, and there is no common part in housings of the motor 10, the reducer 20, and the motor controller 30. In an embodiment, the motor 10 and the reducer 20 share one integrated housing, and the housing of the motor controller 30 and the integrated housing are of a separated structure.

Still refer to FIG. 2 and FIG. 3. In an embodiment, the motor 10 includes a motor housing (not shown in the figure), the motor stator, the motor rotor 100, and the motor shaft 140. The motor housing is configured to sleeve on and fasten the motor stator, and the motor stator can generate a magnetic field after a current is applied. The motor rotor 100 is sleeved on and fastened to the motor shaft 140 and can rotate relative to the motor stator. There is an air gap between the motor rotor 100 and the motor stator. When the motor 10 works, the motor stator exerts acting force on the motor rotor 100, so that the motor rotor 100 can rotate relative to the motor stator. When the motor rotor 100 rotates, the motor shaft 140 can be driven to rotate, and the motor 10 outputs power through the motor shaft 140.

The following describes in detail the motor rotor 100 provided in this embodiment of this application.

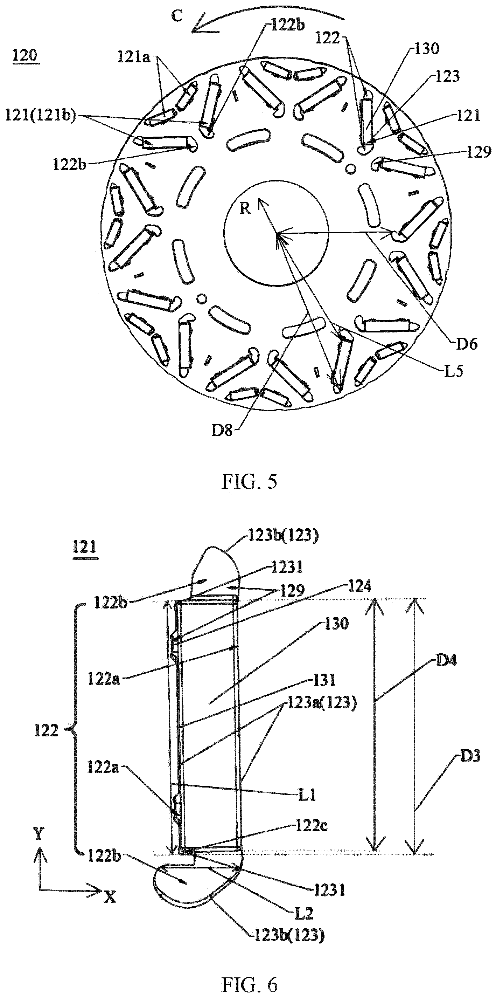

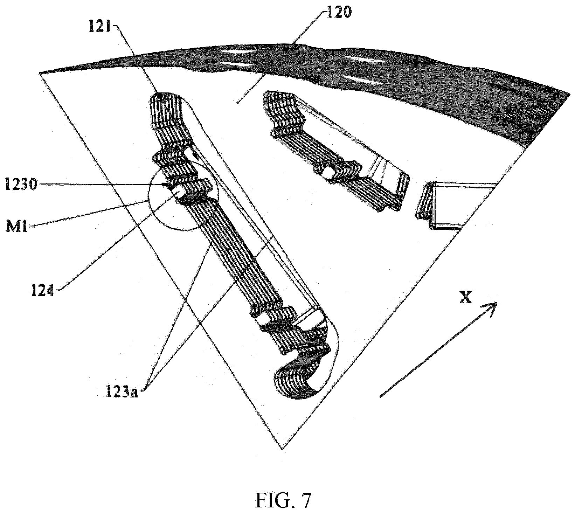

Refer to FIG. 4 to FIG. 7. FIG. 4 is an exploded view of a motor rotor 100 according to an embodiment of this application. FIG. 5 is a diagram of a structure of a rotor iron core 120 according to an embodiment of this application. FIG. 6 is a diagram of a structure of a magnetic steel groove 121 according to an embodiment of this application. FIG. 7 is a diagram of a partial structure of a rotor iron core 120 according to an embodiment of this application.

In an embodiment, the oil-cooled motor rotor 100 in a groove includes a motor shaft 140, at least one end plate 110, at least one rotor iron core 120, and a plurality of magnetic steels 130 (as shown in FIG. 4). The at least one rotor iron core 120 is configured to be in coaxial transmission with the motor shaft 140. One rotor iron core 120a and one end plate 110 are adjacently arranged in an axial direction O of a motor. The one rotor iron core 120a includes a plurality of magnetic steel grooves 121. Each magnetic steel groove 121 is configured to fasten at least one magnetic steel 130. At least one magnetic steel groove 121 includes a plurality of bumps 124 (as shown in FIG. 7), each bump 124 protrudes from a groove wall 123 of one magnetic steel groove 121 to one magnetic steel 130 (as shown in FIG. 6), one end that is of each bump 124 and that faces the one magnetic steel 130 is configured to abut the one magnetic steel 130, and there is a gap 122 (as shown in FIG. 6) between a part of the groove wall 123 of the one magnetic steel groove 121 other than the bump 124 and the one magnetic steel 130. The gap 122 is configured to form an internal flow channel 129 of the one rotor iron core 120a and is configured to communicate with an oil groove 114 of the one end plate 110 (as shown in FIG. 4).

In this embodiment of this application, the motor rotor 100 is fastened on and sleeved on the motor shaft 140. After receiving an alternating current, the motor stator drives the motor rotor 100 to rotate, to drive the motor shaft 140 to rotate. The magnetic steel groove 121 is configured to accommodate the magnetic steel 130, and the magnetic steel 130 is configured to generate a magnetic field of the motor rotor 100. The one end plate 110 and at least one rotor iron core 120 are sleeved on the motor shaft 140, so that the at least one rotor iron core 120 and the one end plate 110 rotate with the motor shaft 140. In this embodiment of this application, the one rotor iron core 120a is one rotor iron core adjacent to the one end plate 110.

In this embodiment of this application, the magnetic steel groove 121 includes the plurality of bumps 124 (as shown in FIG. 7), and each bump 124 protrudes to the magnetic steel 130. This helps squeeze the bump 124 when the magnetic steel 130 is inserted, helps the bump 124 elastically fasten the magnetic steel 130, and helps form the gap 122 between the magnetic steel 130 and the magnetic steel groove 121. In this embodiment of this application, the bump 124 protrudes from the groove wall 123 of the one magnetic steel groove 121 to the one magnetic steel 130. This indicates that the groove wall 123 of the one magnetic steel groove 121 has a part spaced from the one magnetic steel 130. For example, a part of the groove wall 123 near two sides of the bump 124 is spaced from the one magnetic steel 130, so that at least a part of the groove wall 123 near the bump 124 has the gap 122 with the one magnetic steel 130.

In this embodiment of this application, there is the gap 122 (as shown in FIG. 6) between the part of the groove wall 123 of the one magnetic steel groove 121 other than the bump 124 and the one magnetic steel 130, and the magnetic steel groove 121 and the gap 122 penetrate the rotor iron core 120 in the axial direction O of the motor rotor.

In this embodiment of this application, the gap 122 is configured to form the internal flow channel 129 of the one rotor iron core 120a and is configured to communicate with the oil groove 114 of the one end plate 110 (as shown in FIG. 4). The internal flow channel 129 of the one rotor iron core 120a is for cooling oil to flow into the rotor iron core 120a. The gap 122 helps import the cooling oil flowing in the oil groove 114 on the end plate 110 into the internal flow channel 129 through the gap 122 adjacent to the end plate 110, so that the rotor iron core 120a is cooled.

If plastic is filled between the magnetic steel 130 and the magnetic steel groove 121 to fasten the magnetic steel 130 in the magnetic steel groove 121, there is no gap 122 between the part that is of the magnetic steel 130 and that is fastened to the magnetic steel groove 121 through the plastic. To ensure structural stability between the magnetic steel 130 and the magnetic steel groove 121, the plastic is generally filled between at least two opposite surfaces of the magnetic steel 130 and the magnetic steel groove 121 to implement fastening, so that a surface that is of the magnetic steel groove 121 and that is used to fasten the magnetic steel 130 and the magnetic steel 130 are filled with plastic, and there is no gap 122 for oil flowing. Therefore, the surface that is of the magnetic steel 130 and that is fastened to the groove wall 123 of the magnetic steel groove 121 through the plastic cannot be directly cooled by the cooling oil, and cooling effect is poor. In this embodiment of this application, the groove wall 123 of the one magnetic steel groove 121 is fastened to the one magnetic steel 130 through the bump 124, so that there is the gap 122 between the groove wall 123 having the bump 124 and the magnetic steel 130. The gap 122 is configured to form the internal flow channel 129 of the one rotor iron core 120a and is configured to communicate with the oil groove 114 of the one end plate 110. In this way, the cooling oil can flow into the gap 122, and a surface of the magnetic steel 130 that is fastened to and that abuts the bump 124 can be directly cooled by the cooling oil, thereby improving cooling effect on the magnetic steel 130.

In an embodiment, the magnetic steel 130 is surrounded by the gap 122 in a circumferential direction of the magnetic steel 130. This helps the cooling oil flow into the gap 122 between the groove wall 123 of the magnetic steel groove 121 and the magnetic steel 130, helps the cooling oil directly contact the magnetic steel 130, helps increase a contact area between the cooling oil and the magnetic steel 130, and improves cooling efficiency.

If the plastic is filled between the two opposite surfaces of the magnetic steel 130 and the magnetic steel groove 121 to fasten the magnetic steel 130 in the magnetic steel groove 121, to cool the magnetic steel 130, the gap 122 for cooling oil flow is formed between at most the other two opposite surfaces of the magnetic steel 130 and the magnetic steel groove 121. The gap 122 between the other two opposite surfaces and the magnetic steel groove 121 is separated by the plastic filled between the two opposite surfaces of the magnetic steel 130 and the magnetic steel groove 121, so that an oil channel formed by the other two opposite surfaces of the magnetic steel 130 cannot flow between each other, so that more flow traffic is required to ensure cooling effect of the cooling oil. However, in this embodiment of this application, the magnetic steel 130 is surrounded by the gap 122 in the circumferential direction of the magnetic steel 130, and the gap 122 is configured to accommodate the cooling oil. In other words, there is no plastic between the magnetic steel 130 and the magnetic steel groove 121, and the gap 122 surrounds the magnetic steel 130. In this way, the cooling oil can surround a circumferential side of the magnetic steel 130, to improve cooling effect on the magnetic steel 130. In addition, the cooling oil can flow in the gap 122 between the magnetic steel 130 and any side edge of the magnetic steel groove 121, so that a flow channel for the cooling oil to pass through in the magnetic steel groove 121 can be reduced. For example, only one flow channel is required to communicate with the gap 122, so that the cooling oil can flow in the circumferential direction of the magnetic steel 130. A process is saved and processing costs are reduced.

In this embodiment of this application, the oil groove 114 of each end plate 110 is configured to communicate an internal oil channel 141 of the motor shaft 140 with the gap 122, so that the end plate 110 communicates the internal oil channel 141 of the motor shaft 140 with the gap 122. This helps the end plate 110 transport the cooling oil in the internal oil channel 141 of the motor shaft 140 to the gap 122 for the magnetic steel 130 to cool, thereby helping reduce coercive force of the magnetic steel 130 and reduce production costs of the magnetic steel 130.

In this embodiment of this application, a part of the oil groove 114 may import the cooling oil into the rotor iron core 120a, and the other part of the oil groove 114 may import redundant cooling oil inside the rotor iron core 120a out of the rotor iron core 120a. This helps avoid permeation of the cooling oil between the rotor iron cores 120a and reduce an oil churning loss.

In an embodiment, the bump 124 is a metal sheet, and after being bent, the metal sheet has action force of re-bending.

Refer to FIG. 5, FIG. 6, and FIG. 7. In an embodiment, the groove wall 123 of the one magnetic steel groove 121 includes two first side walls 123a (as shown in FIG. 6), and the two first side walls 123a are arranged opposite to each other in a first direction X. One first side wall 123 a includes at least one bump 124, the at least one bump 124 protrudes to the one magnetic steel 130 in the first direction X, there is a first gap 122a between a part of the one first side wall 123a other than the at least one bump 124 and the one magnetic steel 130, and the first gap 122a is configured to form the internal flow channel 129 (as shown in FIG. 4) of the one rotor iron core 120a and is configured to communicate with the oil groove 114 (as shown in FIG. 4) of the one end plate 110.

In this embodiment of this application, the one first side wall 123a includes at least one bump 124 (as shown in FIG. 7), and the at least one bump 124 protrudes to the one magnetic steel 130 in the first direction X, so that after the magnetic steel 130 is inserted into the magnetic steel groove 121, the at least one bump 124 is configured to elastically abut the one magnetic steel 130. In an embodiment, the one first side wall 123a includes a plurality of bumps 124, to improve fastening stability of the magnetic steel 130.

In this embodiment of this application, there is the first gap 122a between the part of one first side wall 123a other than the at least one bump 124 and the one magnetic steel 130, and the first gap 122a is used by the rotor iron core 120a to form the internal flow channel 129, so that the first gap 122a is configured to form a part of the internal flow channel 129 of the rotor iron core 120a. The cooling oil flows in from the first gap 122a, and flows in the internal flow channel 129. This helps cool the magnetic steel 130 in the rotor iron core 120a.

In this embodiment of this application, the first gap 122a is configured to form the internal flow channel 129 of the one rotor iron core 120a and is configured to communicate with the oil groove 114 of the one end plate 110 (as shown in FIG. 4). The internal flow channel 129 of the rotor iron core 120a is used for the cooling oil to flow into the rotor iron core 120a. The first gap 122a helps import the cooling oil in the oil groove 114 of the end plate 110 into the internal flow channel 129 through the first gap 122a adjacent to the end plate 110, so that the rotor iron core 120a is cooled.

Refer to FIG. 6 and FIG. 7. In an embodiment, the one magnetic steel 130 includes one first magnetic steel surface 131, the one first magnetic steel surface 131 is opposite to the one first side wall 123a in the first direction X, one end that is of the at least one bump 124 and that faces the one magnetic steel 130 is configured to abut the one first magnetic steel surface 131, and the one first magnetic steel surface 131 is planar.

In this embodiment of this application, the first gap 122a is formed between the one first magnetic steel surface 131 and the one first side wall 123a through the at least one bump 124, so that the cooling oil smoothly flows through the internal flow channel 129 of the rotor iron core 120a. The one bump 124 protrudes from the one first side wall 123a to the one first magnetic steel surface 131, and the one first magnetic steel surface 131 is flat, so that the one first side wall 123a, the one bump 124, and the one first magnetic steel surface 131 form an "I"-shaped structure, and a larger first gap 122a is formed on two sides of the one bump 124. This helps more cooling oil flow through the first gap 122a, and helps improve cooling efficiency of the rotor iron core 120a.

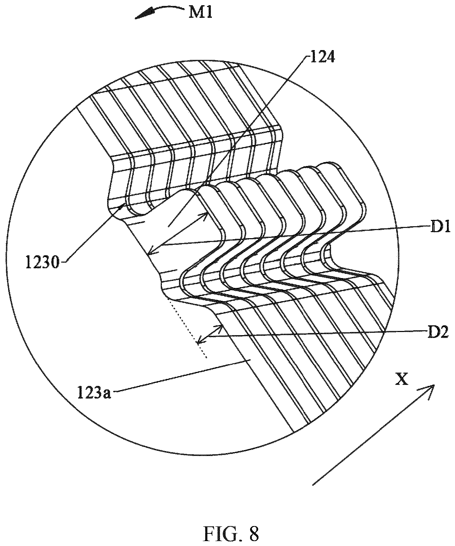

Refer to FIG. 6, FIG. 7, and FIG. 8. FIG. 8 is a partial enlarged view of a part M1 in FIG. 7. In an embodiment, the one first side wall 123a further includes at least one groove 1230 (as shown in FIG. 8), the groove 1230 caves in the first direction X and faces away from the one magnetic steel 130, the at least one groove 1230 has one bump 124, the one bump 124 protrudes from a groove bottom of the groove 1230 in which the bump 124 is located to the one magnetic steel 130, and a length of the one bump 124 in the first direction X is greater than a groove depth of the one groove 1230 in which the bump 124 is located.

In this embodiment of this application, the one first side wall 123a further includes the at least one groove 1230, the groove 1230 caves in the first direction X and faces away from the one magnetic steel 130, and the groove 1230 provides space for accommodating the bump 124, thereby facilitating arrangement of the bump 124. The at least one groove 1230 has the one bump 124, the bump 124 protrudes from a groove bottom of the groove 1230 in which the bump 124 is located to the one magnetic steel 130, and existence of the groove 1230 makes the bump 124 longer. This helps increase elastic force of one bump 124, so that the bump 124 is more easily squeezed by the magnetic steel 130, so that the bump 124 is fastened relative to the magnetic steel 130. In this embodiment of this application, the groove 1230 caves in the first direction X and faces away from the one magnetic steel 130, so that a distance between the groove bottom of the groove 1230 and the one magnetic steel 130 is larger, and a length of the gap 122 between the groove bottom of the groove 1230 and the one magnetic steel 130 in the first direction X is larger. This helps form a larger first gap 122a for the cooling oil to flow, thereby improving cooling effect on one magnetic steel 130.

As shown in FIG. 8, in this embodiment of this application, a length of the one bump 124 in the first direction X is denoted as D1, the groove depth of the one groove 1230 in which the bump 124 is located is denoted as D2, and D1>D2. This facilitates bending of the one bump 124. If D1<D2, when the magnetic steel 130 is inserted into the magnetic steel groove 121, the magnetic steel 130 cannot contact the bump 124 on the first side wall 123a of the magnetic steel groove 121. As a result, the magnetic steel 130 cannot be fastened to the magnetic steel groove 121.

In an embodiment, the first side wall 123a does not have the groove 1230, and the first side wall 123a is flat, thereby reducing difficulty in a processing process and saving a process flow.

Refer to FIG. 6. In an embodiment, the groove wall 123 of the one magnetic steel groove 121 further includes two second side walls 123b, the two second side walls 123b are arranged opposite to each other in a second direction Y, and the first direction X intersects the second direction Y. There is a second gap 122b between one second side wall 123b and the one magnetic steel 130, the second gap 122b is configured to form the internal flow channel 129 of the one rotor iron core 120a and is configured to communicate with the internal flow channel of the one end plate 110, and the second gap 122b is communicated with the first gap 122a.

In this embodiment of this application, existence of the two second side walls 123b helps form the second gap 122b between the magnetic steel groove 121 and the magnetic steel 130. There is the second gap 122b between the one second side wall 123b and the one magnetic steel 130, and the second gap 122b helps provide more space for the cooling oil to flow between the second side wall 123b and the magnetic steel 130. The second gap 122b is configured to form the internal flow channel 129 of the one rotor iron core 120a and is configured to communicate with the internal flow channel of the one end plate 110. The internal flow channel 129 of the rotor iron core 120a is configured to flow the cooling oil into the rotor iron core 120a. In other words, the second gap 122b helps cool the rotor iron core 120a. The second gap 122b is communicated with the first gap 122a. This facilitates flowing of the cooling oil in the magnetic steel groove 121, and further helps the cooling oil wrap around the magnetic steel 130 for cooling, thereby helping improve cooling efficiency.

In an embodiment, the first direction X is perpendicular to the second direction Y, so that a manufacturing process of the magnetic steel groove 121 is simple. This facilitates processing of the magnetic steel groove 121.

In this embodiment of this application, the two first gaps 122a and the two second gaps 122b alternate and communicate with each other in sequence, and the two first gaps 122a and the two second gaps 122b form an annular gap 122. This facilitates flowing of the cooling oil between the first gap 122a and the second gap 122b. In this way, all peripheries of the magnetic steel 130 are in direct contact with the cooling oil. This facilitates rapid cooling of the magnetic steel 130, thereby helping reduce coercive force of the magnetic steel 130 and reduce production costs of the magnetic steel 130.

Still refer to FIG. 6. In an embodiment, a length of each first side wall 123a in the second direction Y is greater than a length of each second side wall 123b in the first direction X. A length of the first gap 122a between each first side wall 123a and the magnetic steel 130 in the second direction Y is greater than a length of the second gap 122b between each second side wall 123b and the magnetic steel 130 in the first direction X. A length of the first gap 122a between each first side wall 123a and the magnetic steel 130 in the first direction X is less than a length of the second gap 122b between each second side wall 123b and the magnetic steel 130 in the second direction Y.

In this embodiment of this application, a length of the first side wall 123a is denoted as L1, a length of the second side wall 123b is denoted as L2, and L1>L2. This helps form a long and narrow magnetic steel groove 121.

In this embodiment of this application, the length of the first gap 122a between each first side wall 123a and the magnetic steel 130 in the second direction Y is greater than the length of the second gap 122b between each second side wall 123b and the magnetic steel 130 in the first direction X. The length of the first gap 122a between each first side wall 123 a and the magnetic steel 130 in the first direction X is less than the length of the second gap 122b between each second side wall 123b and the magnetic steel 130 in the second direction Y. The first gap 122a formed between the magnetic steel 130 in the magnetic steel groove 121 and the first side wall 123a is narrow and long. This helps the magnetic steel 130 and the magnetic steel groove 121 maintain structural stability. The first gap 122a has a long length in the second direction Y, so that a contact area between the cooling oil in the first gap 122a and the magnetic steel 130 is large. A length of the first gap 122a in the first direction X is short, so that only a small amount of cooling oil needs to flow in the first gap 122a. The second gap 122b formed between the magnetic steel 130 in the magnetic steel groove 121 and the second side wall 123b is thick and wide. This facilitates smoother flow of the cooling oil, so that the cooling oil in the first gap 122a and the second gap 122b can effectively flow. This facilitates cooling of the magnetic steel 130, helps reduce coercive force of the magnetic steel 130, and reduces production costs.

Refer to FIG. 6. In an embodiment, the one first side wall 123a includes two limiting bumps 1231, the two limiting bumps 1231 protrude to a center of the one magnetic steel groove 121, and the two limiting bumps 1231 are configured to limit a moving distance of the one magnetic steel 130 in the second direction Y. In the second direction Y, two limiting bumps 1231 are arranged at two ends of the one magnetic steel 130, a spacing between the two limiting bumps 1231 is greater than a length of the one magnetic steel 130, there is a third gap 122c between at least one limiting bump 1231 and the one magnetic steel 130 in the second direction Y, and the third gap 122c is configured to communicate the first gap 122a with the second gap 122b.

In this embodiment of this application, the two limiting bumps 1231 protrude to the center of the one magnetic steel groove 121, so that there is space between the two limiting bumps 1231 in the second direction Y to accommodate the magnetic steel 130. The two limiting bumps 1231 are configured to control a moving distance of the magnetic steel 130 in the second direction Y within a specific range.

In this embodiment of this application, in the second direction Y, two limiting bumps 1231 are arranged at two ends of the one magnetic steel 130, and the two limiting bumps 1231 can limit a moving distance of the magnetic steel 130 in the second direction Y. A spacing between the two limiting bumps 1231 is denoted as D3, a length of one magnetic steel 130 is denoted as D4, and D3>D4. Movable space is provided between the two limiting bumps 1231 for the magnetic steel 130.

In this embodiment of this application, there is a third gap 122c between the at least one limiting bump 1231 and the one magnetic steel 130 in the second direction Y. When the two limiting bumps 1231 and the at least one bump 124 are located on a same first side wall 123a, the third gap 122c is configured to communicate the first gap 122a with the second gap 122b. This helps the cooling oil in the magnetic steel groove 121 flows around the magnetic steel 130, and helps accelerate cooling of the magnetic steel 130. In an embodiment, when the motor rotor 100 rotates, the magnetic steel 130 is swung to move outwards, so that the third gap 122c is formed between the magnetic steel 130 and one limiting bump 1231 close to an axis center of the rotor.

In an embodiment, the two limiting bumps 1231 and the at least one bump 124 are respectively located on two different first side walls 123a. In this case, the second gap 122b and the first gap 122a do not need to be directly communicated through the third gap 122c. The third gap 122c is configured to increase a contact area between the cooling oil and a surface that is of the magnetic steel 130 and that is close to the axis center of the rotor in the second direction Y, to improve heat dissipation and cooling effect.

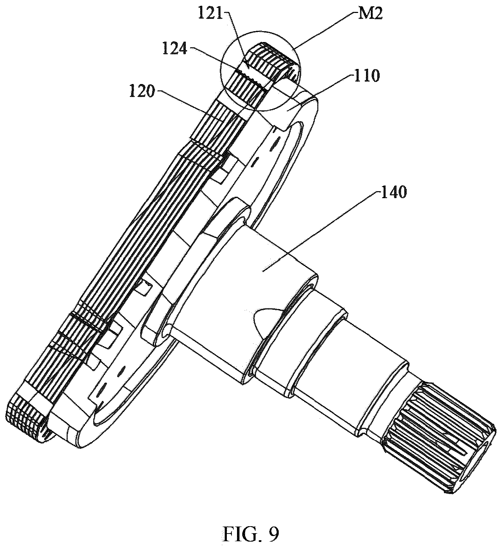

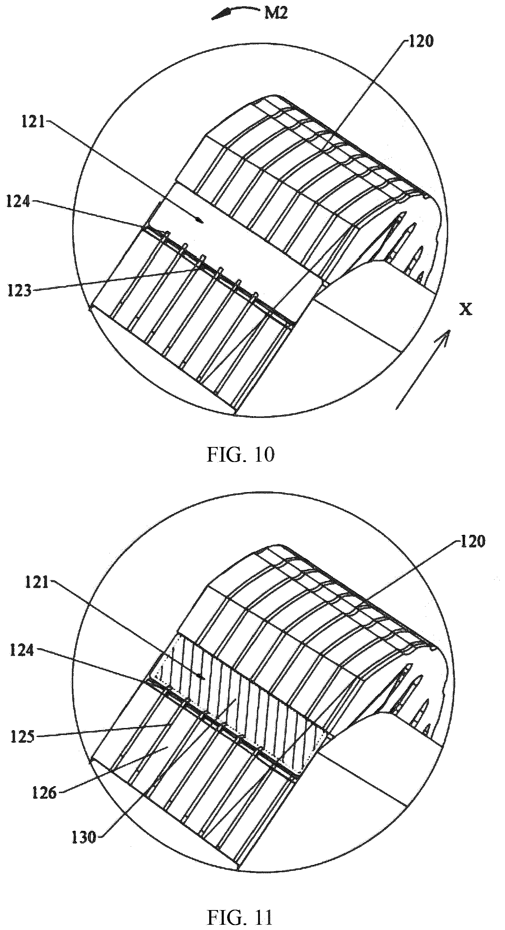

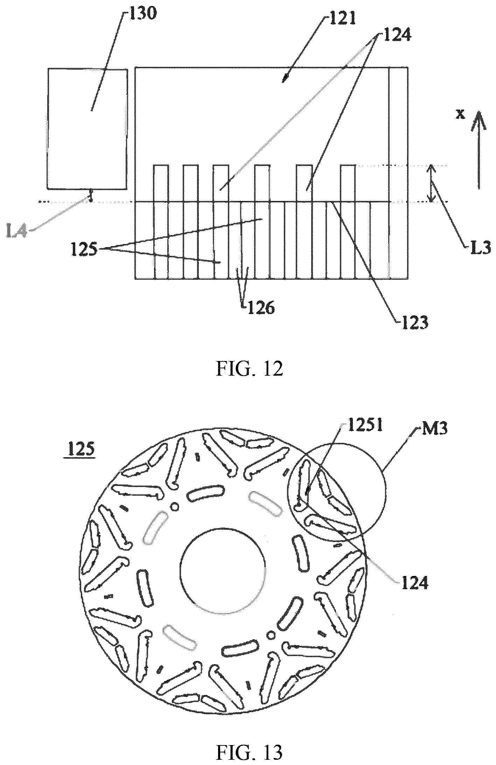

Refer to FIG. 9, FIG. 10, FIG. 11, and FIG. 12. FIG. 9 is a partial sectional view of a motor rotor 100 according to an embodiment of this application. FIG. 10 is a partial enlarged view of a part M2 in FIG. 9. FIG. 11 is a partial sectional view of a motor rotor 100 according to an embodiment of this application. FIG. 12 is a diagram of a structure of a rotor iron core 120a according to an embodiment of this application.

In an embodiment, a length of each bump 124 protruding to the magnetic steel 130 that the magnetic steel groove 121 in which the bump 124 is located abuts is greater than a distance between a groove wall 123 of the magnetic steel groove 121 in which the bump 124 is located and the magnetic steel 130 that the bump abuts, and after the magnetic steel 130 is inserted into the magnetic steel groove 121 in which the bump 124 is located, the bump 124 is in a bent state.

In this embodiment of this application, as shown in FIG. 10 and FIG. 12, when the magnetic steel 130 is not inserted into the magnetic steel groove 121, the bump 124 protrudes to the center of the magnetic steel groove 121 in a first direction X. A protruding direction of the bump 124 to the center of the magnetic steel groove 121 is parallel to the first direction X. A protruding length L3 of the bump 124 to the center of the magnetic steel groove 121 is greater than a distance L4 between the groove wall 123 of the magnetic steel groove 121 in which the bump 124 is located and the magnetic steel 130. As shown in FIG. 11, after the magnetic steel 130 is inserted into the magnetic steel groove 121, because the bump 124 is elastic and is bent after being squeezed by the magnetic steel 130, the bent bump 124 exerts acting force to the magnetic steel 130, so that the magnetic steel 130 is relatively fastened to the bump 124 and the groove wall 123 of the magnetic steel groove 121, and the stable gap 122 is formed for stable flow of the cooling oil.

In this embodiment of this application, the bump 124 is configured to fasten the magnetic steel 130, so that the stable gap 122 is formed between the magnetic steel 130 in the magnetic steel groove 121 and the groove wall 123 of the magnetic steel groove 121, and the cooling oil flows through the gap 122 between the groove wall 123 of the magnetic steel groove 121 and the magnetic steel 130. The bump 124 protrudes from the groove wall 123 of the magnetic steel groove 121 to the center of the magnetic steel groove 121, so that when the magnetic steel 130 is inserted into the magnetic steel groove 121, the magnetic steel 130 is in contact with the bump 124, and the bump 124 fastens the magnetic steel 130. One end that is of the bump 124 and that faces the axis center of the magnetic steel groove 121 abuts the magnetic steel 130, so that the gap 122 is formed between the groove wall 123 of the magnetic steel groove 121 and the magnetic steel 130, and space is provided for cooling oil to flow through the magnetic steel groove 121. This helps improve cooling effect of the magnetic steel 130, helps reduce coercive force of the magnetic steel 130, and reduces costs of the magnetic steel 130.

In this embodiment of this application, the magnetic steel 130 does not need to be fastened in a plastic injection manner or a glue injection manner. This can prevent a plastic injection material and a plastic injection material from blocking the gap 122, avoid a case in which the oil cannot flow through the magnetic steel groove 121, and improve cooling efficiency of the motor rotor 100.

In an embodiment, the first side wall 123 a includes the bump 124, so that stability of fastening the magnetic steel 130 by the bump 124 can be improved. The first gap 122a has a small length in the first direction X, so that the short bump 124 can implement effect of fastening the magnetic steel 130. In comparison with that in a case of forming the bump 124 in the second gap 122b, the second side wall 123b is farther away from the magnetic steel 130, and stability of abutting the bump 124 against the magnetic steel 130 is lower than stability of abutting the first gap 122a against the magnetic steel 130.

Still refer to FIG. 6 and FIG. 7. In an embodiment, each first side wall 123a of the magnetic steel groove 121 includes at least one bump 124. This helps increase a volume of the gap 122 between the groove wall 123 of the magnetic steel groove 121 and the magnetic steel 130, helps the cooling oil flow through the gap 122 more smoothly, further helps more cooling oil flow through the gap 122, and improve cooling efficiency of the motor rotor 100.

In an implementation, when only one first side wall 123a of the magnetic steel groove 121 has the bump 124, the bump 124 abuts the magnetic steel 130 and approaches another first side wall 123a of the magnetic steel groove 121, so that the another first side wall 123a abuts the magnetic steel 130.

In an embodiment, at least one second side wall 123b of the magnetic steel groove 121 includes at least one bump 124. Four side walls of the magnetic steel groove 121 in the circumferential direction each include the bump 124, to improve fastening stability of the magnetic steel 130. Therefore, there is the gap 122 between each of the four side walls of the magnetic steel 130 in the circumferential direction and the groove wall 123 of the magnetic steel groove 121. In this way, the gap 122 corresponding to each side wall is wide. This facilitates circumferential direction flow of the cooling oil around the magnetic steel 130.

In an embodiment, the first side wall 123a includes the plurality of bumps 124, and the plurality of bumps 124 are sequentially spaced in the axial direction O of the motor rotor, to improve structural stability of the magnetic steel 130. The plurality of bumps 124 are spaced. This helps the coolant flow in the gap 122.

In an embodiment, the plurality of bumps 124 of the first side wall 123a include at least two rows of bump groups spaced in the second direction Y, and each row of bump groups includes a plurality of bumps 124 sequentially spaced in the axial direction O of the motor rotor. Stability and uniformity of fastening the magnetic steel 130 in the second direction Y can be improved through the at least two rows of bump groups. The at least two rows of bump groups are spaced in the second direction Y, to facilitate flowing of coolant in the gap 122 in the second direction Y. Fluidity and heat dissipation uniformity of the coolant in the gap 122 are improved.

In an embodiment, bumps 124 in two adjacent rows of bump groups are arranged in an alignment manner in a second direction Y. This helps simplify a processing process and a preparation process.

In an embodiment, the bumps 124 in the two adjacent rows of bump groups are arranged in a staggered manner in the second direction Y. In this way, the cooling oil can be evenly mixed in the gap 122 by the bumps 124 that are arranged in the staggered manner, thereby improving cooling uniformity of the magnetic steel 130.

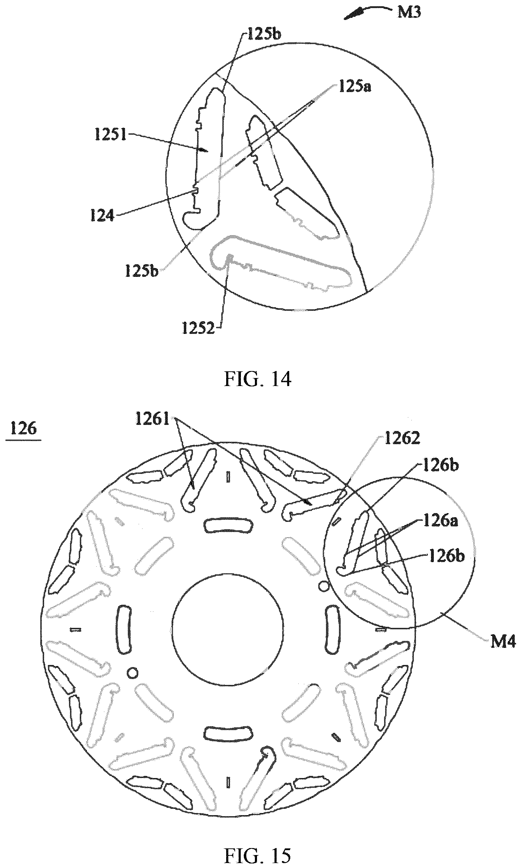

Refer to FIG. 4, FIG. 13, and FIG. 14. FIG. 13 is a diagram of a structure of a first iron core punching 125 according to an embodiment of this application. FIG. 14 is a partial enlarged view of a part M3 in FIG. 13. In an embodiment, the one rotor iron core 120a includes a plurality of first iron core punchings 125 and a plurality of second iron core punchings 126. Each first iron core punching 125 includes a first magnetic steel hole 1251, and each second iron core punching 126 includes a second magnetic steel hole 1261. The plurality of first iron core punchings 125 and the plurality of second iron core punchings 126 are stacked in an axial direction O of a motor rotor, and all the first magnetic steel holes 1251 and all the second magnetic steel holes 1261 are aligned in the axial direction O of the motor rotor. Each first iron core punching 125 includes at least one bump 124, and the bump 124 protrudes from a hole wall of the first magnetic steel hole 1251 to an axis center of the first magnetic steel hole 1251 (as shown in FIG. 14). In the axial direction O of the motor rotor, at least one second iron core punching 126 is arranged between two adjacent first iron core punchings 125 (as shown in FIG. 12).

In this embodiment of this application, the plurality of first iron core punchings 125 and the plurality of second iron core punchings 126 are stacked in the axial direction O of the motor rotor to form the rotor iron core 120a. The first magnetic steel hole 1251 penetrates the first iron core punching 125 in the axial direction O of the motor rotor, and the second magnetic steel hole 1261 penetrates the second iron core punching 126 in the axial direction O of the motor rotor. The plurality of first iron core punchings 125 and the plurality of second iron core punchings 126 are stacked in the axial direction O of the motor rotor. All the first magnetic steel holes 1251 and all the second magnetic steel holes 1261 are aligned in the axial direction O of the motor rotor to form the magnetic steel groove 121 in the rotor iron core 120. The magnetic steel groove 121 extends in the axial direction O of the motor rotor. This also helps the magnetic steel 130 be more smoothly inserted into the magnetic steel groove 121.

In this embodiment of this application, each first iron core punching 125 includes at least one bump 124, and the bump 124 protrudes from the hole wall of the first magnetic steel hole 1251 to a center of the first magnetic steel hole 1251 in the first direction X. Therefore, when the magnetic steel 130 is inserted into the magnetic steel groove 121, the magnetic steel 130 may be in contact with the bump 124, so that the bump 124 abuts and fastens the magnetic steel 130. In an embodiment, each first iron core punching 125 includes a plurality of bumps 124 spaced in a circumferential direction of the first magnetic steel hole 1251. In an embodiment, the first iron core punching 125 and the bump 124 are of an integrally formed structure. For example, the bump 124 and the first magnetic steel hole 1251 may be formed by integrally stamping the iron core punching. Materials of the bump 124 and the first iron core punching 125 are both metal materials, so that the bump 124 has acting force for restoring to an original state after being bent.

In this embodiment of this application, in the axial direction O of the motor rotor, at least one second iron core punching 126 is arranged between two adjacent first iron core punchings 125. The first iron core punching 125 has the bump 124. At least one second iron core punching 126 is arranged between the two adjacent first iron core punchings 125, so that the plurality of first iron core punchings 125 and the plurality of second iron core punchings 126 are stacked in the axial direction O of the motor rotor to form the magnetic steel groove 121, and the magnetic steel 130 is more smoothly inserted into the magnetic steel groove 121. Therefore, the bump 124 is bent to have bending space (as shown in FIG. 11) when the magnetic steel 130 is inserted into the magnetic steel groove 121, and the bump 124 and the magnetic steel 130 are abutted and fastened. Arrangement of the at least one second iron core punching 126 between two adjacent first iron core punchings 125 further helps provide the gap 122 between two adjacent bumps 124 for coolant to flow.

In an embodiment, abutting and fastening between the bump 124 and the magnetic steel 130 may be elastic pressing and fastening, or may be riveting and fastening.

Refer to FIG. 13, FIG. 14, and FIG. 15. FIG. 15 is a diagram of a structure of the second iron core punching 126 according to an embodiment of this application. In an embodiment, the first magnetic steel hole 1251 of the first iron core punching 125 includes two first hole edges 125a and two second hole edges 125b.

In this embodiment of this application, the at least one bump 124 is located on the first hole edge 125a of the first magnetic steel hole 1251 of the first iron core punching 125. The bump 124 protrudes from the first hole edge 125a of the first magnetic steel hole 1251 to an axis center of the first magnetic steel hole 1251 in the first direction X. Therefore, when the magnetic steel 130 is inserted into the magnetic steel groove 121, the magnetic steel 130 is in contact with the bump 124. This helps the bump 124 abut and fasten the magnetic steel 130.

In an embodiment, the first iron core punching 125 further includes two first limiting bumps 1252 (as shown in FIG. 14), and the two first limiting bumps 1252 protrude from the first hole edge 125a to the axis center of the first magnetic steel hole 1251 in the first direction X. The first limiting bump 1252 is configured to limit the magnetic steel 130.

Still refer to FIG. 11. In an embodiment, N second iron core punchings 126 are arranged between two adjacent first iron core punchings 125 in the axial direction O of the motor rotor, where N is an integer greater than 0, and N≥a protruding length of the bump 124 to the first magnetic steel hole 1251×a stacking rate/a thickness of the first iron core punching 125. The thickness of the first iron core punching 125 is the same as a thickness of the second iron core punching 126. The stacking rate is equal to a ratio of a sum of thicknesses of all the first iron core punchings 125 and all the second iron core punchings 126 to a length of the rotor iron core 120 in the axial direction O of the motor rotor.

In this embodiment of this application, the bump 124 is located in the first magnetic steel hole 1251 of the first iron core punching 125, and the N second iron core punchings 126 are arranged between the two adjacent first iron core punchings 125 in the axial direction O of the motor rotor. When N≥the protruding length of the bump 124 to the first magnetic steel hole 1251×a stacking rate/a thickness of the first iron core punching 125, the magnetic steel 130 can be fastened to the bump 124 in the magnetic steel groove 121. This provides space in a process in which the bump 124 is pressed down and bent, and facilitates a smoother and more reasonable process of inserting and fastening the magnetic steel 130. The thicknesses of the first iron core punching 125 and the second iron core punching 126 are the same. This helps the rotor iron core 120 to be more regular and reasonable.

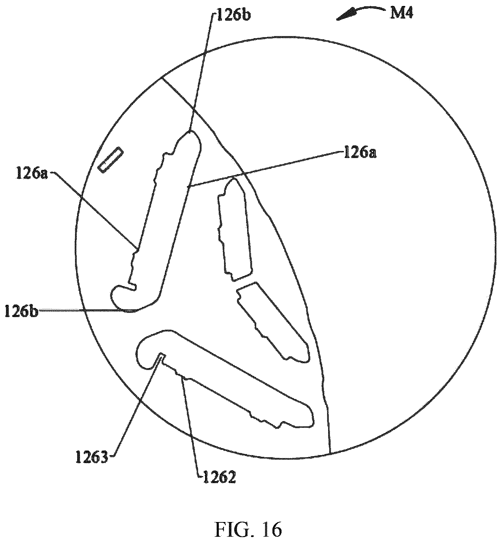

Refer to FIG. 15 and FIG. 16. FIG. 16 is a partial enlarged view of a part M4 in FIG. 15. In an embodiment, a hole wall of the second magnetic steel hole 1261 includes a concave part 1262. The concave part 1262 caves from the hole wall of the second magnetic steel hole 1261 and away from the axis center of the second magnetic steel hole 1261. Concave parts 1262 in the N second iron core punchings 126 are aligned in the axial direction O of the motor. The concave parts 1262 in the N second iron core punchings 126 are configured to accommodate the bump 124.

In this embodiment of this application, the second magnetic steel hole 1261 is located in the second iron core punching 126. The second magnetic steel hole 1261 penetrates the second iron core punching 126 in the axial direction O of the motor rotor. The hole wall of the second magnetic steel hole 1261 includes the concave part 1262. The concave part 1262 caves from the hole wall of the second magnetic steel hole 1261 and away from the axis center of the second magnetic steel hole 1261. This helps form a larger gap 122 for the cooling oil to flow when the magnetic steel 130 is inserted into the magnetic steel groove 121. This helps cool the magnetic steel 130. The concave parts 1262 in the N second iron core punchings 126 are aligned in the axial direction O of the motor. This helps the concave parts 1262 on the second iron core form a flat space. Therefore, when the magnetic steel 130 is inserted into the magnetic steel groove 121 for fastening, and the bump 124 is pressed down by a thrust, the concave part 1262 of the second iron core punching 126 has space to accommodate the bump 124. This provides space for insertion of the magnetic steel 130, and further helps fasten the magnetic steel 130 more reliably in the magnetic steel groove 121. The concave part 1262 is further configured to increase a volume of the gap 122, and the concave part 1262 is configured to accommodate the cooling oil, so that more cooling oil is used to cool the magnetic steel 130.

Refer to FIG. 15 and FIG. 16. In an embodiment, the second magnetic steel hole 1261 of the second iron core punching 126 includes two first hole edges 126a and two second hole edges 126b.

In this embodiment of this application, the concave part 1262 is located on a first hole edge 126a of the second magnetic steel hole 1261 of the second iron core punching 126. The concave part 1262 caves from the hole wall of the second magnetic steel hole 1261 and away from the axis center of the second magnetic steel hole 1261 in the first direction X. Therefore, when the magnetic steel 130 is inserted into the magnetic steel groove 121, the concave part 1262 may accommodate the bump 124 of the first iron core punching 125. This helps the bump 124 abut and fasten the magnetic steel 130.

In an embodiment, after all the first iron core punchings 125 and all the second iron core punchings 126 are stacked in alignment with each other in the axial direction O of the motor rotor, first hole edges 125a of all first iron core punchings 125 and first hole edges 126a of all second iron core punchings 126 are aligned and stacked to form the first side wall 123a of the magnetic steel groove 121, and second hole edges 125b of all first iron core punchings 125 and second hole edges 126b of all second iron core punchings 126 are aligned and stacked to form a second side wall 123b of the magnetic steel groove 121.

In an embodiment, two first hole edges 126a of the first magnetic steel holes 1251 of all the first iron core punchings 125 and two first hole edges 126a of the second magnetic steel holes 1261 of all the second iron core punchings 126 are respectively aligned and stacked in the axial direction O of the motor rotor to form two first side walls 123a of the magnetic steel groove 121. Two second hole edges 126b of the first magnetic steel holes 1251 of all the first iron core punchings 125 and two second hole edges 126b of the second magnetic steel holes 1261 of all the second iron core punchings 126 are respectively aligned and stacked in the axial direction O of the motor rotor to form two second side walls 123b of the magnetic steel groove 121.

In an embodiment, the second iron core punching 126 further includes a second limiting bump 1263 (as shown in FIG. 16), and the second limiting bump 1263 protrudes from the first hole edge 126a to the axis center of the second magnetic steel hole 1261 in the first direction X. The second limiting bump 1263 is configured to limit the magnetic steel 130.

In an embodiment, the second iron core punching 126 forms the second magnetic steel hole 1261, the concave part 1262, and the second limiting bump 1263 through stamping, so that structural strength of the second iron core punching 126 is reliable.

In an embodiment, all the first limiting bumps 1252 and all the second limiting bumps 1263 in each rotor iron core 120 are stacked in the axial direction O of the motor rotor to form the limiting bumps 1231.

In an embodiment, an implementation of the one magnetic steel groove 121 in the one rotor iron core 120 and the magnetic steel 130 located inside the magnetic steel groove 121 is applicable to each magnetic steel groove 121 in the one rotor iron core 120 and the magnetic steel 130 located inside the magnetic steel groove 121. Details are not described herein again.

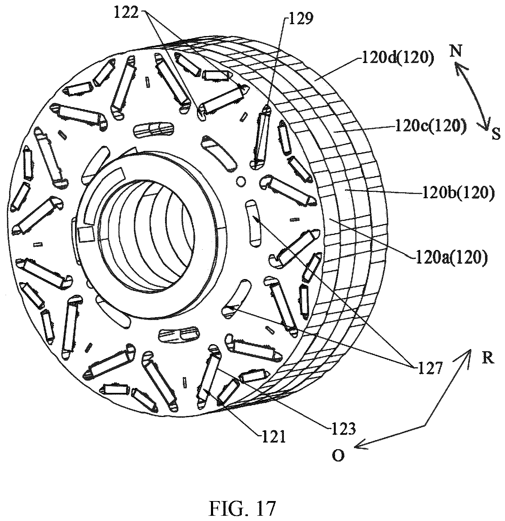

FIG. 17 is a diagram of a structure of the rotor iron core 120 according to an embodiment of this application. In an embodiment, at least one rotor iron core 120 includes a plurality of rotor iron cores 120, and a gap 122 in each rotor iron core 120 is communicated with a gap 122 in an adjacent rotor iron core 120. At least two rotor iron cores 120 are staggered in a clockwise direction S, and projections of gaps 122 of two adjacent rotor iron cores 120 at least partially overlap.

In this embodiment of this application, a structure and an implementation of each rotor iron core 120 are the same as those of the foregoing rotor iron core 120a. An implementation of the one magnetic steel groove 121 in the one rotor iron core 120a and the magnetic steel 130 located inside the magnetic steel groove 121 is also applicable to each magnetic steel groove 121 in each rotor iron core 120 and the magnetic steel 130 located inside the magnetic steel groove 121.

In this embodiment of this application, the plurality of rotor iron cores 120 are stacked and fastened to the motor shaft 140 in the axial direction O of the motor rotor, and the gap 122 in each rotor iron core 120 is communicated with the gap 122 in the adjacent rotor iron core 120. This helps the cooling oil flowing through the gap 122 in the magnetic steel groove 121 in the rotor iron core 120 to flow in the plurality of rotor iron cores 120, helps cool the magnetic steel 130 in the magnetic steel groove 121, helps reduce coercive force of the magnetic steel 130, so that costs of the magnetic steel 130 are reduced. This further helps reduce oil accumulation between the magnetic steels 130, and reduce oil seepage and oil churning between the plurality of first iron core punchings 125 and the plurality of second iron core punchings 126.

In this embodiment of this application, if the at least two rotor iron cores 120 are staggered in the clockwise direction S, the magnetic steel groove 121 and the magnetic steel 130 on the corresponding rotor iron core 120 are staggered in the clockwise direction S. The magnetic steel 130 is configured to generate a magnetic field of the motor rotor 100. The magnetic steel 130 on the rotor iron core 120 is deflected at a specific angle, to help reduce an electromagnetic force amplitude in a radial direction R of the motor rotor, eliminate a torsion mode excited by axial unevenness of the electromagnetic force, and improve casting quality of the motor rotor 100.

In this embodiment of this application, the projections of the gaps 122 of the two adjacent rotor iron cores 120 at least partially overlap, so that the cooling oil flowing through the gaps 122 of the two adjacent rotor iron cores 120 can flow between the rotor iron cores 120. This helps the cooling oil in the magnetic steel groove 121 in the rotor iron core 120 flow more smoothly, and avoids oil accumulation, oil seepage, and oil churning caused by accumulation between the two adjacent rotor iron cores 120, thereby reducing cooling efficiency.

Still refer to FIG. 17. In an embodiment, the at least one rotor iron core 120 includes a first rotor iron core 120a, a second rotor iron core 120b, a third rotor iron core 120c, and a fourth rotor iron core 120d.

In this embodiment of this application, the first rotor iron core 120a, the second rotor iron core 120b, the third rotor iron core 120c, and the fourth rotor iron core 120d are sequentially arranged adjacently in the axial direction O of the motor rotor. The first rotor iron core 120a, the second rotor iron core 120b, the third rotor iron core 120c, and the fourth rotor iron core 120d are all formed by stacking the first iron core punching 125 and the second iron core punching 126 in the axial direction O of the motor rotor. In the axial direction O of the motor rotor, the second rotor iron core 120b is staggered relative to the first rotor iron core 120a in a counterclockwise direction N. The third rotor iron core 120c is aligned with the second rotor iron core 120b, the fourth rotor iron core 120d is staggered relative to the third rotor iron core 120c in the clockwise direction S, and an angle at which the second rotor iron core 120b is staggered relative to the first rotor iron core 120a in the counterclockwise direction N is the same as an angle at which the fourth rotor iron core 120d is staggered relative to the third rotor iron core 120c in the clockwise direction S. This helps reduce the electromagnetic force amplitude in the radial direction R of the motor rotor, eliminate the torsion mode excited by axial unevenness of the electromagnetic force, and improve the casting quality of the motor rotor 100.

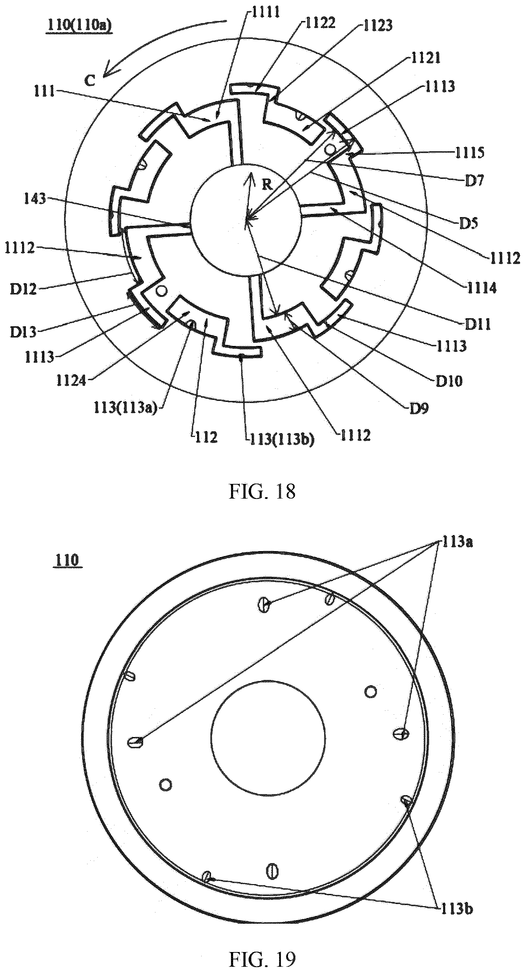

Refer to FIG. 4, FIG. 5, FIG. 17, and FIG. 18. FIG. 18 is a diagram of a structure of the end plate 110 according to an embodiment of this application. In an embodiment, the one end plate 110 includes a plurality of first oil groove 1113, and each first oil groove 1113 is configured to communicate an internal oil channel 141 of the motor shaft 140 with at least one gap 122 in the one rotor iron core 120a. A groove opening of each first oil groove 1113 faces the one rotor iron core 120a in the axial direction O of the motor. In the radial direction R of the motor, a spacing between a groove wall that is of one first oil groove 1113 and that faces away from an axis center of the motor and the axis center of the motor is greater than a spacing between the one magnetic steel groove 121 and the axis center of the motor, and a spacing between a groove wall that is of the one first oil groove 1113 and that faces the axis center of the motor and the axis center of the motor is less than a spacing between a groove wall that is of the one magnetic steel groove 121 and that faces away from the axis center of the motor and the axis center of the motor.

In this embodiment of this application, the first oil groove 1113 is communicated with the internal oil channel 141 of the motor shaft 140, so that the cooling oil in the internal oil channel 141 of the motor shaft 140 is imported from the first oil groove 1113 of the end plate 110 into the rotor iron core 120, to cool the rotor iron core 120 and the magnetic steel 130. Each first oil groove 1113 is communicated with at least one gap 122 in the one rotor iron core 120, so that the first oil groove 1113 can export, to the at least one gap 122 in the rotor iron core 120, the cooling oil imported from the internal oil channel 141, and the cooling oil can enter the internal flow channel 129 of the rotor iron core 120. This facilitates flowing of the cooling oil in the magnetic steel groove 121, and helps cool the magnetic steel 130.

In this embodiment of this application, the groove opening of each first oil groove 1113 faces the one rotor iron core 120 in the axial direction O of the motor, so that the first oil groove 1113 can smoothly flow the cooling oil from the internal oil channel 141 of the motor shaft 140 into the internal flow channel 129 of the rotor iron core 120.

In this embodiment of this application, in the radial direction R of the motor, the spacing between the groove wall that is of the one first oil groove 1113 and that faces away from the axis center of the motor and the axis center of the motor is denoted as D5 (as shown in FIG. 18). The spacing between the one magnetic steel groove 121 and the axis center of the motor is denoted as D6 (as shown in FIG. 5). The spacing between the groove wall that is of one first oil groove 1113 and that faces the axis center of the motor and the axis center of the motor is denoted as D7 (as shown in FIG. 18). The spacing between the groove wall that is of the one magnetic steel groove 121 and that faces away from the axis center of the motor and the axis center of the motor is denoted as D8 (as shown in FIG. 5). D5>D6, and D7<D8. This helps a projection of the one first oil groove 1113 in the axial direction O of the motor cover a part of the one magnetic steel groove 121, helps import the cooling oil in the one first oil groove 1113 into the one magnetic steel groove 121 for cooling of the magnetic steel 130, helps reduce coercive force of the magnetic steel 130, and helps reduce production costs of the magnetic steel 130.

Refer to FIG. 4, FIG. 5, and FIG. 18. In an embodiment, in the radial direction R of the motor, the spacing between the groove wall that is of the one first oil groove 1113 and that faces away from the axis center of the motor and the axis center of the motor is less than the spacing between the one magnetic steel 130 and the axis center of the motor. Alternatively, in the radial direction R of the motor, the spacing between the groove wall that is of the one first oil groove 1113 and that faces the axis center of the motor and the axis center of the motor is greater than the spacing between the one magnetic steel 130 and the axis center of the motor.

In this embodiment of this application, in the radial direction R of the motor, the spacing between the groove wall that is of the one first oil groove 1113 and that faces away from the axis center of the motor and the axis center of the motor is D5 (as shown in FIG. 18), and the spacing between the one magnetic steel 130 and the axis center of the motor is L5 (as shown in FIG. 5). In an embodiment, when D5>L5, that is, in the axial direction O of the motor, a projection of the one first oil groove 1113 partially overlaps a projection of the one magnetic steel 130, and the projection of one first oil groove 1113 partially overlaps the first gap 122a. This helps the cooling oil in the first oil groove 1113 be imported into the magnetic steel groove 121 from the first gap 122a of the magnetic steel groove 121 and the magnetic steel 130, so that the magnetic steel 130 can be cooled.

In an embodiment, when D5<L5, in the axial direction O of the motor, a projection part between the projection of the one first oil groove 1113 and the magnetic steel groove 121 of the motor mainly overlaps a projection of the second gap 122b. This helps the cooling oil in the first oil groove 1113 be imported into the magnetic steel groove 121 from the second gap 122b of the magnetic steel groove 121 and the magnetic steel 130, so that the magnetic steel 130 can be cooled.

Refer to FIG. 4, FIG. 5, and FIG. 18. In an embodiment, a minimum spacing between the one magnetic steel groove 121 and one adjacent magnetic steel groove 121 in a circumferential direction C of the motor is less than a length of the one first oil groove 1113.

In this embodiment of this application, the one first oil groove 1113 may simultaneously export, to the one magnetic steel groove 121 and the one magnetic steel groove 121 adjacent to the first oil groove, the cooling oil imported from the internal oil channel 141 of the motor shaft 140. In other words, the one first oil groove 1113 may simultaneously import the cooling oil into two magnetic steel grooves 121. This helps reduce a quantity of arranged first oil grooves 1113, and helps the one first oil groove 1113 to simultaneously flow the cooling oil into the two magnetic steel grooves 121 of the rotor iron core 120, and to simultaneously cool two magnetic steels 130.

Refer to FIG. 17 and FIG. 18. In an embodiment, the one rotor iron core 120 further includes a plurality of oil guiding grooves 127, each oil guiding groove 127 penetrates the one rotor iron core 120 in the axial direction O of the motor, the one end plate 110 further includes a plurality of second oil grooves 1112, and one second oil groove 1112 is configured to communicate with the internal oil channel 141 (as shown in FIG. 4) of the motor shaft 140, one oil guiding groove 127, and the one first oil groove 1113. In the radial direction R of the motor, a length of the one second oil groove 1112 is greater than the length of the one first oil groove 1113, and a spacing between the one second oil groove 1112 and the axis center of the motor is less than a spacing between the one first oil groove 1113 and the axis center of the motor. In the circumferential direction C of the motor, the length of the one second oil groove 1112 is greater than the length of the one first oil groove 1113.

In this embodiment of this application, the oil guiding groove 127 is configured for flow of the cooling oil for the motor rotor 100 to cool. The one end plate 110 further includes the plurality of second oil grooves 1112. The second oil groove 1112 is configured to import the cooling oil in the internal oil channel 141 of the motor shaft 140 into the oil guiding groove 127, to cool the rotor iron core 120. The one second oil groove 1112 may further import the cooling oil in the internal oil channel 141 of the motor shaft 140 into one first oil groove 1113. This facilitates flow of the cooling oil on the one end plate 110, and also helps the first oil groove 1113 receive the cooling oil from the second oil groove 1112, and import the cooling oil into the magnetic steel groove 121 for direct contact cooling of the magnetic steel 130.

In this embodiment of this application, in the radial direction R of the motor, the length of the one second oil groove 1112 is denoted as D9 (as shown in FIG. 18), the length of the one first oil groove 1113 is denoted as D10 (as shown in FIG. 18), and D9>D10. D9 is large, so that the second oil groove 1112 can import as much cooling oil in the internal oil channel 141 of the motor shaft 140 into the oil guiding groove 127 through the end plate 110 as possible. The cooling oil may be further imported into the first oil groove 1113, so that the magnetic steel 130 in the magnetic steel groove 121 is cooled. Space for the cooling oil that is imported into the gap 122 in the magnetic steel groove 121 by the first oil groove 1113 is limited, and a small length of D10 can also meet an amount of the cooling oil that needs to flow in the magnetic steel groove 121.

In this embodiment of this application, the spacing between the one second oil groove 1112 and the axis center of the motor is denoted as D11 (as shown in FIG. 18), the spacing between the one first oil groove 1113 and the axis center of the motor is D7, and D11<D7. In this way, when the motor rotor 100 rotates, the cooling oil in the one second oil groove 1112 can flow into the one first oil groove 1113 in a direction of centrifugal force. D11<D7, so that more magnetic steel grooves 121 can be formed in a large area around the rotor iron core, thereby improving performance of the motor rotor 100. In an embodiment, when a rotational speed of the motor rotor 100 is low, heat generated is not large, and D11<D7. In this case, the cooling oil is cooled through oil that flows through the second oil groove 1112 closer to the axis center. In this way, the second oil groove 1112 can meet heat dissipation and cooling effect at a low speed. When the motor rotor 100 generates large heat, the motor rotor 100 that rotates at a high speed can dump the cooling oil to an outer magnetic steel groove 121. The second oil groove 1112 and the first oil groove 1113 are respectively used to feed the oil to the oil guiding groove 127 and the magnetic steel groove 121, to improve the heat dissipation and cooling effect of the motor rotor 100 that rotates at the high speed

In this embodiment of this application, in the circumferential direction C of the motor, the length of the one second oil groove 1112 is denoted as D12 (as shown in FIG. 18), the length of the one first oil groove 1113 is denoted as D13 (as shown in FIG. 18), and D12>D13. D12 is large, so that the second oil groove 1112 can import as much cooling oil in the internal oil channel 141 of the motor shaft 140 into the oil guiding groove 127 through the end plate 110 as possible. The cooling oil may be further imported into the first oil groove 1113, so that the magnetic steel 130 in the magnetic steel groove 121 is cooled. D13 is small. This helps the motor rotor 100 to shunt and cool at a high speed and a low speed, so that cooling effect of the one first oil groove 1113 and the one second oil groove 1112 is more adapted to operation of the motor rotor 100.

Refer to FIG. 4, FIG. 17, and FIG. 18. In an embodiment, each end plate 110 further includes a plurality of third oil groove 1114 and a plurality of fourth oil groove 1115. One first oil groove 1113, one second oil groove 1112, one third oil groove 1114, and one fourth oil groove 1115 form one oil inlet groove 111. Each oil inlet groove 111 is configured to communicate the internal oil channel 141 of the motor shaft 140 with the at least one gap 122. A groove opening 1111 of each oil inlet groove 111 faces the rotor iron core 120 in the axial direction O of the motor rotor. In the axial direction O of the motor rotor, a projection of each oil inlet groove 111 at least partially overlaps a projection of a gap 122 between the groove wall 123 of the at least one magnetic steel groove 121 and the magnetic steel 130 inside the at least one magnetic steel groove 121.

In this embodiment of this application, the oil inlet groove 111 is configured to receive the cooling oil transported from the internal oil channel 141 of the motor shaft 140, and transport the cooling oil to the gap 122 of the magnetic steel groove 121 of the rotor iron core 120. The groove opening 1111 of each oil inlet groove 111 faces the rotor iron core 120 in the axial direction O of the motor rotor. This helps the cooling oil be input into the rotor iron core 120 from the groove opening 1111 of the oil inlet groove 111, and facilitates cooling of the rotor iron core 120.

In this embodiment of this application, in the axial direction O of the motor rotor, the projection of each oil inlet groove 111 at least partially overlaps the projection of the gap 122 between the groove wall 123 of the at least one magnetic steel groove 121 and the magnetic steel 130 inside the at least one magnetic steel groove 121. Therefore, after the cooling oil in the internal oil channel 141 of the motor shaft 140 is input into the oil inlet groove 111, the cooling oil can flow from the groove opening 1111 of the oil inlet groove 111 to the gap 122 of the magnetic steel groove 121 in the rotor iron core 120. This helps the cooling oil directly contact with the magnetic steel 130, and helps cool the magnetic steel 130, thereby helping reduce coercive force of the magnetic steel 130 and reduce costs of the magnetic steel 130.

It should be noted that the projection in the axial direction O of the motor rotor is a projection in the axial direction O of the motor rotor on a projection surface perpendicular to the axial direction O of the motor rotor. The projection surface formed by a projection in the axial direction O of the motor rotor is perpendicular to the axial direction O of the motor rotor. The projection of the oil inlet groove 111 is a projection of an area enclosed by a groove wall of the oil inlet groove 111, and the projection of the gap 122 is a projection of an area enclosed by an edge of the gap 122.

Refer to FIG. 4 and FIG. 18. In an embodiment, each oil inlet groove 111 includes one second oil groove 1112, one first oil groove 1113, one third oil groove 1114, and one fourth oil groove 1115. The one third oil groove 1114, the one second oil groove 1112, the one fourth oil groove 1115, and the one first oil groove 1113 are sequentially communicated. In the radial direction R of the motor rotor, the one third oil groove 1114, the one second oil groove 1112, the one fourth oil groove 1115, and the one first oil groove 1113 are sequentially arranged from inside to outside. In the circumferential direction C of the motor rotor, the one third oil groove 1114, the one second oil groove 1112, the one fourth oil groove 1115, and the one first oil groove 1113 are sequentially arranged.

In this embodiment of this application, the plurality of second oil groove 1112, the plurality of first oil groove 1113, the plurality of third oil groove 1114, and the plurality of fourth oil groove 1115 are configured to transport the cooling oil transmitted through the internal oil channel 141 of the motor shaft 140. The one third oil groove 1114, the one second oil groove 1112, the one fourth oil groove 1115, and the one first oil groove 1113 are sequentially communicated. This helps the cooling oil input from the internal oil channel 141 of the motor shaft 140 smoothly flow through the one third oil groove 1114, the one second oil groove 1112, the one fourth oil groove 1115, and the one first oil groove 1113 in sequence.

In this embodiment of this application, in the radial direction R of the motor rotor, the one third oil groove 1114, the one second oil groove 1112, the one fourth oil groove 1115, and the one first oil groove 1113 are sequentially arranged. This helps the motor rotor 100 rotate. The cooling oil in the oil inlet groove 111 sequentially flows through the one third oil groove 1114, the one second oil groove 1112, the one fourth oil groove 1115, and the one first oil groove 1113 in a centrifugal force direction, that is, in the radial direction R of the motor rotor. This helps the cooling oil flow more smoothly, and helps reduce power consumption.

In this embodiment of this application, in the circumferential direction C of the motor rotor, the one third oil groove 1114, the one second oil groove 1112, the one fourth oil groove 1115, and the one first oil groove 1113 are sequentially arranged. This helps the motor rotor 100 rotate. The cooling oil in the oil inlet groove 111 sequentially flows through the one third oil groove 1114, the one second oil groove 1112, the one fourth oil groove 1115, and the one first oil groove 1113 in a tangent direction of rotation of the motor rotor in the circumferential direction C. This helps the cooling oil flow more smoothly, and helps reduce power consumption. Refer to FIG. 17 and FIG. 18. In an embodiment, the oil guiding groove 127 penetrates the rotor iron core 120 in the axial direction O of the motor rotor. The third oil groove 1114 is configured to communicate with the internal oil channel 141 of the motor shaft 140 (as shown in FIG. 4). The second oil groove 1112 is configured to communicate with the oil guiding groove 127. The first oil groove 1113 is configured to communicate with the gap 122 between the groove wall 123 of the magnetic steel groove 121 and the magnetic steel 130 inside the magnetic steel groove 121. In the axial direction O of the motor rotor, a projection of the second oil groove 1112 at least partially overlaps a projection of an oil guiding groove 127 of the rotor iron core 120 adjacent to the second oil groove 1112. A projection of the first oil groove 1113 at least partially overlaps a projection of the one magnetic steel groove 121 of the rotor iron core 120 adjacent to the first oil groove 1113.

In this embodiment of this application, the oil guiding groove 127 penetrates the rotor iron core 120 in the axial direction O of the motor rotor. The plurality of oil guiding grooves 127 are spaced in the circumferential direction C of the motor rotor, and the oil guiding groove 127 is configured to flow the cooling oil for the motor rotor 100 to cool. The third oil groove 1114 is configured to communicate with the internal oil channel 141 of the motor shaft 140, and the second oil groove 1112 is configured to communicate with the oil guiding groove 127. This helps the cooling oil in the internal oil channel 141 of the motor shaft 140 flow into the oil guiding groove 127 in the rotor iron core 120 through the third oil groove 1114 and the second oil groove 1112, thereby facilitating cooling of the rotor iron core 120. The first oil groove 1113 is configured to communicate with the gap 122 between the groove wall 123 of the magnetic steel groove 121 and the magnetic steel 130 inside the magnetic steel groove 121. Therefore, the cooling oil in the internal oil channel 141 of the motor shaft 140 flows into the gap 122 between the groove wall 123 of the magnetic steel groove 121 and the magnetic steel 130 inside the groove wall 123 through the third oil groove 1114, the second oil groove 1112, the fourth oil groove 1115, and the first oil groove 1113 in sequence. Therefore, the cooling oil is in direct contact with the magnetic steel 130, and cooling of the magnetic steel 130 is facilitated. This helps reduce coercive force of the magnetic steel 130, and reduce costs of the magnetic steel 130.

In this embodiment of this application, in the axial direction O of the motor rotor, the projection of the second oil groove 1112 at least partially overlaps the projection of the oil guiding groove 127 of the rotor iron core 120 adjacent to the second oil groove 1112, so that it is possible that the cooling oil in the second oil groove 1112 flows into the oil guiding groove 127. This helps transport, from the third oil groove 1114 and the second oil groove 1112 to the oil guiding groove 127 of the rotor iron core 120, the cooling oil transported from the internal oil channel 141 of the motor shaft 140. The projection of the first oil groove 1113 at least partially overlaps the projection of the one magnetic steel groove 121 of the rotor iron core 120 adj acent to the first oil groove 1113, so that it is possible that the cooling oil in the first oil groove 1113 flows into the gap 122 in the magnetic steel groove 121. This helps the cooling oil flowing out of the internal oil channel 141 of the motor shaft 140 be transported from the third oil groove 1114, the second oil groove 1112, the fourth oil groove 1115, and the first oil groove 1113 to the magnetic steel groove 121 of the rotor iron core 120.

In an embodiment, the second oil groove 1112 and the first oil groove 1113 may be communicated through an internal oil channel of the one end plate 110. In an embodiment, at least one of the second oil groove 1112 and the first oil groove 1113 is communicated with the internal oil channel of the motor shaft through the internal oil channel of the one end plate 110.

Refer to FIG. 5 and FIG. 18. In an embodiment, the two magnetic steel grooves 121 are V-shaped, and a projection of the one first oil groove 1113 in the axial direction O of the motor rotor partially overlaps projections of the two V-shaped magnetic steel grooves 121. Alternatively, in an embodiment, a spacing between the two V-shaped magnetic steel grooves 121 in the circumferential direction C of the motor rotor is less than a length of the one first oil groove 1113 in the circumferential direction C of the motor rotor. The axial direction C of the motor rotor is the same as the circumferential direction of the motor.

In this embodiment of this application, the two magnetic steel grooves 121 form a V-shaped magnetic steel groove structure (as shown in FIG. 5). In this embodiment of this application, the rotor iron core 120 includes two V-shaped magnetic steel groove structures, and the two V-shaped magnetic steel groove structures are respectively denoted as a first V-shaped magnetic steel groove 121a and a second V-shaped magnetic steel groove 121b (as shown in FIG. 5). The first V-shaped magnetic steel groove 121a is arranged on an outer side of the second V-shaped magnetic steel groove 121b in the radial direction R of the motor rotor. A length of each magnetic steel groove 121 in the first V-shaped magnetic steel groove 121a is less than a length of each magnetic steel groove 121 in the second V-shaped magnetic steel groove 121b.

In this embodiment of this application, there is a gap 122 between the groove wall 123 of the magnetic steel groove 121 and the magnetic steel 130, and the gap 122 includes a first gap 122a and a second gap 122b. Aprojection of one first oil groove 1113 overlaps a projection of one second gap 122b of the two magnetic steel grooves 121 of the second V-shaped magnetic steel groove 121b. This helps the cooling oil flow from the first oil groove 1113 into the one second gap 122b of the two magnetic steel grooves 121 of the second V-shaped magnetic steel groove 121b, helps the cooling oil directly contact with the magnetic steel 130, and helps the cooling oil cool the magnetic steel 130.

In an embodiment, considering that a length of the first V-shaped magnetic steel groove 121a is small, the first V-shaped magnetic steel groove 121a in the rotor iron core 120 may not form a bump to fasten the magnetic steel 130, and the magnetic steel 130 may be fastened in another manner. In an embodiment, in the at least one rotor iron core 120, a bump 124 may be formed in some magnetic steel grooves 121 to fasten the magnetic steel 130. For example, the bump 124 is formed in some magnetic steel grooves 121 to fasten the magnetic steel 130 and form the gap 122 for oil to flow. A part of the magnetic steel groove 121 is fastened through a foaming coating, and the foaming coating forms a gap for the oil to flow by designing a shape of the coating. In an embodiment, when cooling effect of the rotor iron core 120 does not need to meet a high requirement, the bumps 124 may be formed in some magnetic steel grooves to fasten the magnetic steel 130 and form the gap 122 to for the oil to flow. Apart of the magnetic steel groove 121 is fixed through plastic filling, so that a gap that no oil can flow is formed.

In an embodiment, the magnetic steel grooves 121 may alternatively be arranged in a straight shape, a W shape, a U shape, or the like. The projection of the one first oil groove 1113 in the axial direction O of the motor rotor partially overlaps the projection of the magnetic steel grooves 121.

Refer to FIG. 17 and FIG. 18. In an embodiment, each end plate 110 further includes a plurality of fifth oil groove 1121, a plurality of sixth oil groove 1122, and a plurality of seventh oil groove 1123. One fifth oil groove 1121, one sixth oil groove 1122, and one seventh oil groove 1123 form one oil outlet groove 112. Each oil outlet groove 112 is configured to communicate the gap 122 of the at least one magnetic steel groove 121 with the at least one oil guiding groove 127. A groove opening 1124 of each oil outlet groove 112 faces the rotor iron core 120 in the axial direction O of the motor rotor. In the axial direction O of the motor rotor, a projection of each oil outlet groove 112 at least partially overlaps a projection of a gap 122 between the groove wall 123 of the at least one magnetic steel groove 121 and the magnetic steel 130 inside the at least one magnetic steel groove 121. The projection of each oil outlet groove 112 at least partially overlaps a projection of at least one oil guiding groove 127.

In this embodiment of this application, the oil outlet groove 112 is configured to export the cooling oil from the rotor iron core 120 of the motor rotor 100, to reduce oil accumulation of the cooling oil in the rotor iron core 120, and help improve cooling efficiency of the motor rotor 100. A groove opening 1124 of the oil outlet groove 112 faces the rotor iron core 120 in the axial direction O of the motor rotor, so that the oil outlet groove 112 better receives the cooling oil in the gap 122 of the at least one magnetic steel groove 121 and the at least one oil guiding groove 127 that are communicated with the oil outlet groove 112, and exports the cooling oil out of the motor rotor 100.

In this embodiment of this application, in the axial direction O of the motor rotor, the projection of each oil outlet groove 112 at least partially overlaps the projection of the gap 122 between the groove wall 123 of the at least one magnetic steel groove 121 and the magnetic steel 130 inside the at least one magnetic steel groove 121. This helps the oil outlet groove 112 receive the cooling oil output from the gap 122 in the magnetic steel groove 121. The projection of each oil outlet groove 112 at least partially overlaps the projection of the at least one oil guiding groove 127. This helps the oil outlet groove 112 receive the cooling oil from the oil guiding groove 127, facilitates flow of the cooling oil in the rotor iron core 120, helps reduce oil accumulation of the cooling oil in the rotor iron core 120, helps reduce an oil churning loss, and helps improve cooling efficiency.

Still refer to FIG. 17 and FIG. 18. In an embodiment, each oil outlet groove 112 includes one fifth oil groove 1121, one sixth oil groove 1122, and one seventh oil groove 1123. The one fifth oil groove 1121, the one seventh oil groove 1123, and the one sixth oil groove 1122 are sequentially communicated. The one fifth oil groove 1121, the one seventh oil groove 1123, and the one sixth oil groove 1122 are sequentially arranged from inside to outside in the radial direction R of the motor rotor. The one fifth oil groove 1121, the one seventh oil groove 1123, and the one sixth oil groove 1122 are sequentially arranged in the circumferential direction C of the motor rotor.

In this embodiment of this application, the fifth oil groove 1121 is configured to communicate with the oil guiding groove 127 to receive the cooling oil from the oil guiding groove 127. The sixth oil groove 1122 is configured to communicate with the gap 122 between the groove wall 123 of the magnetic steel groove 121 and the magnetic steel 130 inside the magnetic steel groove 121, and receives the cooling oil from the gap 122 of the magnetic steel groove 121.

In this embodiment of this application, in the radial direction R of the motor rotor, the one fifth oil groove 1121, the one seventh oil groove 1123, and the one sixth oil groove 1122 are sequentially arranged. This helps the motor rotor 100 rotate. The cooling oil in the oil outlet groove 112 sequentially flows through the one fifth oil groove 1121, the one seventh oil groove 1123, and the one sixth oil groove 1122 in the direction of the centrifugal force, that is, in the radial direction R of the motor rotor. This helps the cooling oil flow more smoothly, helps output of the cooling oil, and helps reduce power consumption.

In this embodiment of this application, in the circumferential direction C of the motor rotor, the one fifth oil groove 1121, the one seventh oil groove 1123, and the one sixth oil groove 1122 are sequentially arranged. This helps the motor rotor 100 rotate. The cooling oil in the oil inlet groove 111 sequentially flows through the one fifth oil groove 1121, the one seventh oil groove 1123, and the one sixth oil groove 1122 in the tangent direction of rotation of the motor rotor in the circumferential direction C. This helps the cooling oil flow more smoothly, helps output of the cooling oil, and helps reduce power consumption.

In an embodiment, in the oil outlet groove 112 and the oil inlet groove 111 that are adjacent to each other, the one fifth oil groove 1121 is adjacent to the one first oil groove 1113. An arrangement direction of the one fifth oil groove 1121, the one seventh oil groove 1123, and the one sixth oil groove 1122 in the oil outlet groove 112 is the same as that of the one third oil groove 1114, the one second oil groove 1112, the one fourth oil groove 1115, and the one first oil groove 1113 in the oil inlet groove 111. For example, as shown in FIG. 18, the one fifth oil groove 1121, the one seventh oil groove 1123, and the one sixth oil groove 1122 are arranged in a counterclockwise direction. In an embodiment, the one fifth oil groove 1121, the one seventh oil groove 1123, and the one sixth oil groove 1122 are arranged in a clockwise direction.

In an embodiment, in the radial direction R of the motor rotor, a distance between the fifth oil groove 1121 and an axis of the motor rotor 100 is equal to a distance between the second oil groove 1112 and the axis of the motor rotor 100. A distance between the sixth oil groove 1122 and the axis of the motor rotor 100 is equal to a distance between the first oil groove 1113 and the axis of the motor rotor 100.

Refer to FIG. 17, FIG. 18, and FIG. 19. FIG. 19 is a diagram of a structure of the end plate 110 according to an embodiment of this application. In an embodiment, each end plate 110 further includes a plurality of oil outlet holes 113. The oil outlet holes 113 communicate with the oil outlet groove 112. An opening of the oil outlet hole 113 faces away from the groove opening 1124 of the oil outlet groove 112.

In this embodiment of this application, the oil outlet hole 113 includes a plurality of first oil outlet holes 113 a and a plurality of second oil outlet holes 113b, and the oil outlet hole 113 is configured to discharge excess cooling oil from the end plate 110. In the axial direction O of the motor rotor, a projection of the first oil outlet hole 113 a partially overlaps a projection of the fifth oil groove 1121, and the first oil outlet hole 113a is configured to drain cooling oil in the oil guiding groove 127. A projection of the second oil outlet hole 113b partially overlaps a projection of the sixth oil groove 1122, and the second oil outlet hole 113b is configured to drain cooling oil in the gap 122 of the magnetic steel groove 121 and cooling oil flowing into the seventh oil groove 1123.

In this embodiment of this application, the cooling oil in the internal oil channel 141 of the motor shaft 140 flows out of the motor rotor 100 through the third oil groove 1114, the second oil groove 1112, the oil guiding groove 127, the fifth oil groove 1121, and the first oil outlet hole 113a in sequence. The cooling oil in the internal oil channel 141 (as shown in FIG. 4) of the motor shaft 140 flows out of the motor rotor 100 through the third oil groove 1114, the second oil groove 1112, the fourth oil groove 1115, the first oil groove 1113, the gap 122 of the magnetic steel groove 121, the sixth oil groove 1122, and the second oil outlet hole 113b in sequence.

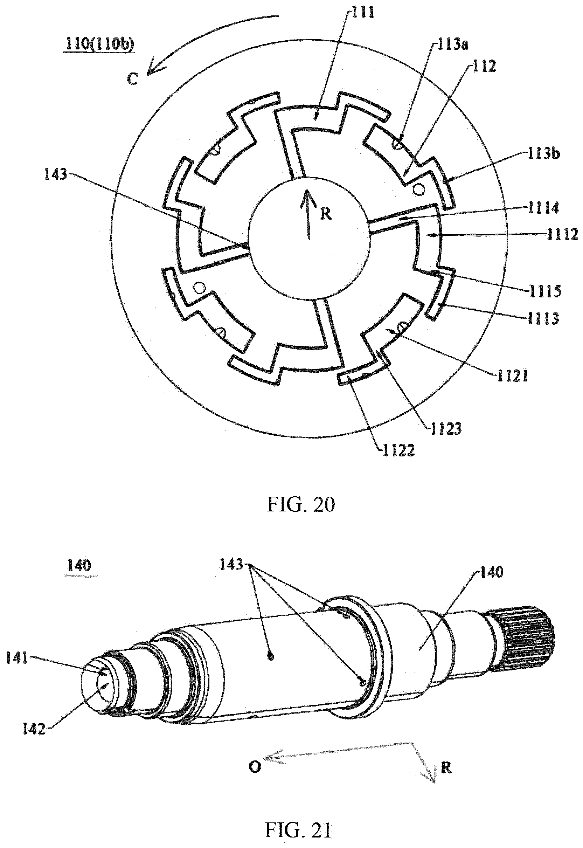

Refer to FIG. 4, FIG. 18, and FIG. 20. FIG. 20 is a diagram of a structure of the end plate 110 according to an embodiment of this application. In an embodiment, the oil outlet grooves 112 and the oil inlet grooves 111 on each end plate 110 are sequentially and alternately arranged in the circumferential direction C of the motor rotor. Oil outlet grooves 112 and the oil inlet grooves 111 on the two end plates 110a and 110b are arranged opposite to each other in the axial direction O of the motor rotor.

In this embodiment of this application, the oil outlet groove 112 and the oil inlet groove 111 are alternately spaced in the circumferential direction C of the motor rotor, so that the end plate 110 can be used to input the cooling oil into the internal oil channel 141 of the motor shaft 140, and can drain the cooling oil that cools the rotor iron core 120 from the motor rotor 100. This further facilitates more even distribution of the cooling oil, and helps cool the motor rotor 100 through the cooling oil. The oil outlet grooves 112 and the oil inlet grooves 111 of the two end plates 110a and 110b are arranged opposite to each other. In this way, the cooling oil in the internal oil channel 141 of the motor shaft 140 flows from the oil inlet groove 111 on one end plate 110a and flows out from the oil outlet groove 112 on the other end plate 1 10b, thereby facilitating a more regular layout of the motor rotor 100.

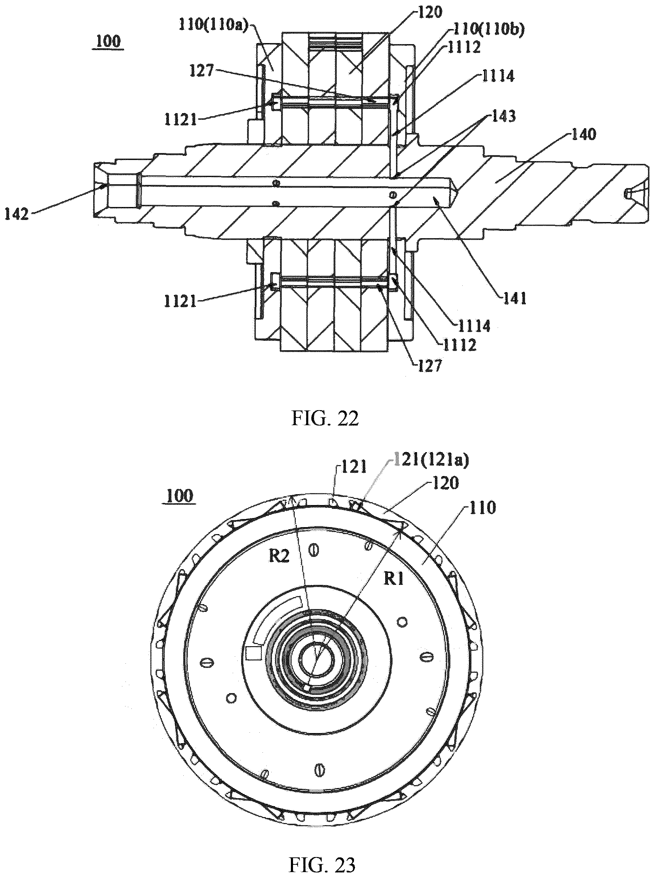

Refer to FIG. 21 and FIG. 22. FIG. 21 is a diagram of a structure of the motor shaft 140 according to an embodiment of this application, and FIG. 22 is a sectional view of the motor rotor 100 according to an embodiment of this application. In an embodiment, the motor shaft 140 includes an axial oil inlet hole 142 and a radial oil outlet hole 143.

In this embodiment of this application, the axial oil inlet hole 142 is configured to input the cooling oil from an entire vehicle into the internal oil channel 141 of the motor shaft 140. The radial oil outlet hole 143 is configured to input the cooling oil in the internal oil channel 141 of the motor shaft 140 to the third oil groove 1114 of the oil inlet groove 111 of the end plate 110, to cool the motor rotor 100. A plurality of radial oil outlet holes 143 at a spline end and a resolver end of the motor shaft 140 are staggered by 45°, so that the radial oil outlet holes 143 are correspondingly communicated with the third oil groove 1114 on the two end plates 110a and 110b (as shown in FIG. 4). This helps the oil inlet groove 111 on the end plate 110 better receive the cooling oil from the internal oil channel 141 of the motor shaft 140. As shown in FIG. 21, a left end of the motor shaft 140 is the resolver end, and the resolver end is configured to mount a resolver sensor. A right end of the motor shaft 140 is a spline end, and the spline end is configured to mount an input shaft of the reducer.

In this embodiment of this application, the cooling oil sequentially flows from the axial oil inlet hole 142, the internal oil channel 141 of the motor shaft 140, the radial oil outlet hole 143, the third oil groove 1114, the second oil groove 1112, the oil guiding groove 127, the fifth oil groove 1121, and the first oil outlet hole 113a (as shown in FIG. 18), is used to cool the motor rotor 100, and flows out of the motor rotor 100. This facilitates cooling of the motor rotor 100, and can drain the cooling oil in the motor rotor 100 in a timely manner, thereby reducing oil accumulation and oil seepage.

Refer to FIG. 5 and FIG. 23. FIG. 23 is a diagram of a structure of the motor rotor 100 according to an embodiment of this application. In an embodiment, an outer diameter of the at least one end plate 110 is less than an outer diameter of the rotor iron core 120, and a part of a gap 122 between the one magnetic steel groove 121 and the one magnetic steel 130 inside the magnetic steel groove 121 is exposed to the at least one end plate 110.

In this embodiment of this application, an outer diameter of the end plate 110 is denoted as R1, an outer diameter of the rotor iron core 120 is denoted as R2, and R1<R2. When the motor rotor 100 operates at a high speed, centrifugal force causes the cooling oil to enter the first V-shaped magnetic steel groove 121a (as shown in FIG. 5) through the gap between the first iron core punching 125 or the second iron core punching 126. At least a part of the magnetic steel groove 121 is exposed on at least one end plate 110. This helps the cooling oil in the rotor iron core 120 flow out of the motor rotor 100 from the magnetic steel groove 121, thereby helping reduce an oil accumulation problem of the motor rotor 100, and helping reduce an oil churning loss. If R1>R2, the cooling oil in the magnetic steel groove 121 cannot flow out of the motor rotor 100 from an end plate 110 side, so that the cooling oil penetrates into an air gap of the first iron core punching 125 or the second iron core punching 126, causing the oil churning loss.

The foregoing describes in detail the oil-cooled motor rotor in the groove, the motor, the powertrain, and the electric vehicle provided in embodiments of this application. The principles and embodiments in this application are described in this specification by using specific examples. The descriptions about embodiments are only provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. An oil-cooled motor rotor in a groove, wherein the motor rotor comprises a motor shaft, at least one end plate, at least one rotor iron core, and a plurality of magnetic steels, the at least one rotor iron core is configured to be in coaxial transmission with the motor shaft, one rotor iron core and one end plate are adjacently arranged in an axial direction of a motor, the one rotor iron core comprises a plurality of magnetic steel grooves, and each magnetic steel groove is configured to fasten at least one magnetic steel;
at least one magnetic steel groove comprises a plurality of bumps, each bump protrudes from a groove wall of one magnetic steel groove to one magnetic steel, one end that is of each bump and that faces the one magnetic steel is configured to abut the one magnetic steel, and there is a gap between a part of the groove wall of the one magnetic steel groove other than the bump and the one magnetic steel; and
the gap is configured to form an internal flow channel of the one rotor iron core and is configured to communicate with an oil groove of the one end plate.

2. The motor rotor according to claim 1, wherein the groove wall of the one magnetic steel groove comprises two first side walls, and the two first side walls are arranged opposite to each other in a first direction; and
one first side wall comprises at least one bump, the at least one bump protrudes to the one magnetic steel in the first direction, there is a first gap between a part of the first side wall other than the at least one bump and the one magnetic steel, and the first gap is configured to form the internal flow channel of the rotor iron core and is configured to communicate with the oil groove of the one end plate.

3. The motor rotor according to claim 2, wherein the one magnetic steel comprises one first magnetic steel surface, the one first magnetic steel surface is opposite to the one first side wall in the first direction, one end that is of the at least one bump and that faces the one magnetic steel is configured to abut the one first magnetic steel surface, and the one first magnetic steel surface is planar.

4. The motor rotor according to claim 2, wherein the one first side wall further comprises at least one groove, the groove caves in the first direction and faces away from the one magnetic steel, the at least one groove has one bump, the one bump protrudes from a groove bottom of the groove in which the one bump is located to the one magnetic steel, and a length of the one bump in the first direction is greater than a groove depth of the groove in which the one bump is located.

5. The motor rotor according to any one of claims 2 to 4, wherein the groove wall of the one magnetic steel groove further comprises two second side walls, the two second side walls are arranged opposite to each other in a second direction, and the first direction intersects the second direction; and
there is a second gap between one second side wall and the one magnetic steel, the second gap is configured to form the internal flow channel of the one rotor iron core and is configured to communicate with the internal flow channel of the one end plate, and the second gap is communicated with the first gap.

6. The motor rotor according to claim 5, wherein the one first side wall comprises two limiting bumps, the two limiting bumps protrude to a center of the one magnetic steel groove, and the two limiting bumps are configured to limit a moving distance of the one magnetic steel in the second direction; and
in the second direction, the two limiting bumps are arranged at two ends of the one magnetic steel, a spacing between the two limiting bumps is greater than a length of the one magnetic steel, there is a third gap between at least one limiting bump and the one magnetic steel in the second direction, and the third gap is configured to communicate the first gap with the second gap.

7. The motor rotor according to any one of claims 1 to 6, wherein a length of the bump protruding to the magnetic steel that the magnetic steel groove in which the bump is located abuts is greater than a distance between a groove wall of the magnetic steel groove in which the bump is located and the magnetic steel that the bump abuts, and after the magnetic steel is inserted into the magnetic steel groove in which the bump is located, the bump is in a bent state.

8. The motor rotor according to any one of claims 1 to 7, wherein the one end plate comprises a plurality of first oil grooves, and each first oil groove is configured to communicate an internal oil channel of the motor shaft with at least one gap in the one rotor iron core;
a groove opening of each first oil groove faces the one rotor iron core in the axial direction of the motor; and
in a radial direction of the motor, a spacing between a groove wall that is of one first oil groove and that faces away from an axis center of the motor and the axis center of the motor is greater than a spacing between the one magnetic steel groove and the axis center of the motor, and a spacing between a groove wall that is of the one first oil groove and that faces the axis center of the motor and the axis center of the motor is less than a spacing between a groove wall that is of the one magnetic steel groove and that faces away from the axis center of the motor and the axis center of the motor.

9. The motor rotor according to claim 8, wherein in the radial direction of the motor, the spacing between the groove wall that is of the one first oil groove and that faces away from the axis center of the motor and the axis center of the motor is less than the spacing between the one magnetic steel and the axis center of the motor; or
in the radial direction of the motor, the spacing between the groove wall that is of the one first oil groove and that faces the axis center of the motor and the axis center of the motor is greater than the spacing between the one magnetic steel and the axis center of the motor.

10. The motor rotor according to claim 8 or 9, wherein a minimum spacing between the one magnetic steel groove and one magnetic steel groove adjacent to the one magnetic steel groove in a circumferential direction of the motor is less than a length of the one first oil groove.

11. The motor rotor according to any one of claims 8 to 10, wherein the one rotor iron core further comprises a plurality of oil guiding grooves, each oil guiding groove penetrates the one rotor iron core in the axial direction of the motor, the one end plate further comprises a plurality of second oil grooves, and one second oil groove is configured to communicate the internal oil channel of the motor shaft, one oil guiding groove, with the one first oil groove;
in the radial direction of the motor, a length of the one second oil groove is greater than the length of the one first oil groove, and a spacing between the one second oil groove and the axis center of the motor is less than a spacing between the one first oil groove and the axis center of the motor; and
in the circumferential direction of the motor, the length of the one second oil groove is greater than the length of the one first oil groove.

12. The motor rotor according to any one of claims 1 to 11, wherein an outer diameter of the one end plate is less than an outer diameter of the one rotor iron core, and a part of the gap between the one magnetic steel groove and the one magnetic steel inside the one magnetic steel groove is exposed relative to the one end plate.

13. A motor, wherein the motor comprises a motor housing, a motor stator, and the motor rotor according to any one of claims 1 to 12, the motor housing is configured to sleeve on and fasten the motor stator, the motor stator is configured to be sleeved on the motor rotor, and the motor rotor is configured to sleeve on and to be fastened to the motor shaft.

14. A powertrain, wherein the powertrain comprises a reducer and the motor according to claim 13, the motor shaft of the motor is configured to be in transmission connection with an input shaft of the reducer, and an output shaft of the reducer is configured to be in transmission connection with wheels of an electric vehicle.

15. An electric vehicle, wherein the electric vehicle comprises a vehicle frame, wheels, and the powertrain according to claim 14, the vehicle frame is configured to fasten the powertrain, and the powertrain is configured to drive the wheels.
